# EUROPÄISCHE PATENTSCHRIFT

(11) **EP 4 179 501 B1**
(45) Veröffentlichungstag und Bekanntmachung des Hinweises auf die Patenterteilung: **25.11.2026**
(21) Anmeldenummer: 21737373.7
(22) Anmeldetag: 24.06.2021
(51) Int. Cl.: G06T 7/73, G06F 3/03, G01B 11/00

(54) **VORRICHTUNG UND VERFAHREN ZUR LAGE- UND POSITIONSERKENNUNG VON MARKIERUNGEN IM DREIDIMENSIONALEN RAUM**
DEVICE AND METHOD FOR DETECTING THE ORIENTATION AND POSITION OF MARKINGS IN THREE-DIMENSIONAL SPACE
DISPOSITIF ET PROCÉDÉ DE DÉTECTION D'EMPLACEMENT ET DE POSITION DE MARQUAGES DANS L'ESPACE TRIDIMENSIONNEL

(30) Priorität: 13.07.2020 DE 102020118407
(43) Veröffentlichungstag der Anmeldung: 17.05.2023
(73) Patentinhaber: soft2tec GmbH, 65428 Rüsselsheim (DE)
(72) Erfinder: GILSON, Laurent, 65719 Hofheim am Taunus (DE); BRÜNING, Wolfgang, 61130 Nidderau (DE); HONISCH, Frank, 65428 Rüsselsheim (DE)
(74) Vertreter: Keil & Schaafhausen Patentanwälte PartGmbB
(86) Internationale Anmeldenummer: PCT/EP2021/067356
(87) Internationale Veröffentlichungsnummer: WO 2022/012899

(56) Entgegenhaltungen:
- EP-A1- 3 059 629
- CN-A- 111 127 559
- DE-U1- 202020 103 679
- US-A- 5 227 985
- US-A1- 2010 277 583
- SARMADI HAMID ET AL: "Simultaneous Multi-View Camera Pose Estimation and Object Tracking With Squared Planar Markers", IEEE ACCESS, vol. 7, 4 March 2019 (2019-03-04), pages 22927 - 22940, XP011712068, DOI: 10.1109/ACCESS.2019.2896648

## Beschreibung

Es wird eine Vorrichtung zur Lage- und Positionserkennung von Markierungen im dreidimensionalen Raum beschrieben. Bei der Lage- und Positionserkennung der Markierungen werden also deren Ort und Orientierung im Raum relativ zu einem definierten Raumkoordinatensystem ermittelt. Die Erfindung betrifft ferner ein Verfahren zur Durchführung der Lage- und Positionserkennung mit der beschriebenen Vorrichtung sowie Computerprogrammprodukt.

Die vorgeschlagene Vorrichtung weist mindestens eine insbesondere an einem Objekt festlegbare Markieranordnung auf. Damit lässt sich dann durch Ermitteln der Lage und Position der Markierungen auf der Markieranordnung auch auf die Lage des Objekts zurückrechnen. Die Markieranordnung umfasst mindestens drei Markiereinheiten mit jeweils entlang einer Linie (im Sinne einer geraden, nicht gebogenen Linie) angeordneten, optisch aktiven Leuchtmitteln. Die Leuchtmittel einer oder jeder der Markiereinheiten sind entlang genau einer geraden Linie angeordnet, wobei die Markiereinheiten nicht kollinear angeordnet sind. Jede der Markiereinheiten weist mindestens drei Leuchtmittel auf, die als Markierungen und/oder Kommunikationselemente ausgebildet sind.

Auch die Markierungen und die Kommunikationselemente sind also jeweils immer optisch aktive Elemente, die sich zumindest in ihrer Funktion unterscheiden, wie später noch beschrieben. In diesem Text wird auch unter dem Begriff "Leuchtmittel" immer ein optisch aktives Element verstanden, d.h. eine eingeschaltete oder Licht reflektierende Leuchtmitteleinrichtung. Auf der Markiereinheit vorhandene, aber nicht eingeschaltete oder nicht reflektierende Leuchtmitteleinrichtungen gelten nicht als (optisch aktive) Leuchtmittel, d.h. Markierungen oder Kommunikationselemente. Damit ist gemeint, dass eine im Betrieb befindliche Markiereinheit, dazu eingerichtet ist, dass im Betrieb eine bestimmte Anzahl von Leuchtmitteln vorhanden ist, die durch eine optische Bilderfassungseinheit sicher erfasst werden können. Dies sind gemäß einer bevorzugten Ausführungsform Licht ausstrahlende Einrichtungen, wie bspw. LEDs, die ein- bzw. abgeschaltet und damit optisch aktiv sind. Optisch aktiv können aber grundsätzlich auch nicht abgedeckte, Licht reflektierenden Flächen im Sinne von Leuchtmitteln sein. Eine zur Verwendung in der Vorrichtung eingerichtete Markiereinheit sieht also vor, dass im Betrieb der Markiereinheit die dazu eingerichteten Leuchtmitteleinrichtungen aktiviert sind und Licht aussenden oder auf sie fallendes Licht reflektieren, bspw. weil die reflektierende Fläche der Leuchtmitteleinrichtung nicht abgedeckt ist.

Weitere im Betrieb nicht eingeschaltete (d.h. im Betrieb ab- oder ausgeschaltete) oder bspw. aufgrund einer Abdeckung nicht reflektierende Leuchtmitteleinrichtungen werden dagegen nicht als Leuchtmittel verstanden. Dies schließt nicht aus, dass alle bspw. elektrisch betriebenen Leuchtmittel ausgeschaltet (d.h. vorübergehend nicht mit Strom versorgt) werden, wenn die Markiereinheit nicht im Betrieb ist und die Vorrichtung nicht zur Lage- und Positionserkennung verwendet wird.

Die Vorrichtung weist ferner mindestens eine optische Bilderfassungseinheit auf, die zur Aufnahme von Bildern der Markieranordnung eingerichtet ist, bspw. in Form einer Digitalkamera, sowie eine Auswerteeinheit, die zur eindeutigen Bestimmung der Lage und der Position der Markierungen und/oder Kommunikationselemente auf der Markieranordnung aus genau einem Bild einer der optischen Bilderfassungseinheiten eingerichtet ist. Dazu sind der Auswerteeinheit die Lage der Leuchtmittel (Markierungen oder Kommunikationselemente) auf den Markiereinheiten und die Lage der Markiereinheiten mit den Markierungen/Kommunikationselementen auf der Markieranordnung bekannt. Gemäß einer bevorzugten Ausführungsform kann vorgesehen sein, dass die Auswerteeinheit dazu eingerichtet ist, die Lange und Position der nur aus den Markierungen zu ermitteln.

Gemäß einer bevorzugten, grundsätzlich bekannten Ausführungsform kann jede Markiereinheit als an- und ausschaltbare Leuchtmitteleinrichtungen LEDs (Leuchtdioden) bevorzugt in einem linearen Array von mehreren (mindestens drei) LEDs ausgebildet sein, die im angeschalteten Zustand Lichtwellen aussenden, vorzugsweise im optisch sichtbaren oder nicht-sichtbaren Wellenlängenbereich. Eine besonders bevorzugte Ausführung sieht Infrarot-LEDs vor. Vorzugsweise können diese LEDs auf einer Platine in einem definierten Abstand angeordnet sein, bspw. als ein LED-Linienarray mit in äquidistantem Abstand angeordneten LEDs oder als an bestimmten Positionen in vorgegebenem Abstand angeordneten (ggf. einzeln auf einer Platine festgelegten) LEDs.

Es wird (nur) jede Anordnung von Markierungen und/oder Kommunikationselementen in einer geraden Linie als erfindungsgemäße Markiereinheit angesehen; Markierungen und/oder Kommunikationselemente, die nicht auf einer solchen Linie liegen, bilden somit keine Markiereinheit gemäß der Erfindung. Wenn nur eine Projektion eines optisch aktiven Leuchtmittels auf einer Linie liegt, die zwei andere optisch aktive Leichtmittel verbindet, das optische aktive Leuchtmittel aber in einer anderen Ebene angeordnet ist, liegt dieses optisch aktive Leuchtmittel nicht auf der Linie im Sinne der Erfindung, die die beiden anderen Leuchtmittel verbindet.

Eine Markiereinheit kann jeweils in einem eigenen (einzelnen) Gehäuse angeordnet sein, so dass mehrere Einzelgehäuse gemeinsam die Markieranordnung bilden. Es können erfindungsgemäß aber auch mehrere Markiereinheiten (bspw. drei Markiereinheiten) in einer definierten relativen Anordnung zueinander in einem gemeinsamen Gehäuse zusammengefasst sein und so eine erfindungsgemäße Markieranordnung bilden.

Aus den Druckschriften EP 1 813 911 A1, US 2005/0201613 A1, EP 1 498 688 B1, WO 2004/ 114 112 A1, US 2008/0111985 A1, WO 2006/ 069 748 A1, US 5 227 985 A, US 7 742 895 B2 und DE 10 2014 012 693 B4 sind Systeme und Verfahren bekannt, die mittels Aufnahme einer an dem Objekt festgelegten Markieranordnung die Lage und Position eines Objekts im Raum bestimmen können. Dazu sind auf der Markieranordnung optisch sichtbare Markierungen in einer festen geometrischen Anordnung vorgesehen. Es sind viele unterschiedliche Anordnungen zur Auswertung möglich. Die meisten der vorgeschlagenen Anordnung sehen mindestens vier Markierungen vor, von den mindestens drei Markierungen eine Ebene aufspannen und mindestens eine Markierung außerhalb dieser Ebene liegt. Die mindestens drei in einer Ebene angeordneten Markierungen können auf mindestens zwei nicht parallelen Geraden liegen, die die Ebene aufspannen. Eine solche Anordnung der Markierungen ermöglicht eine zuverlässige Lage- und Positionsbestimmung der Markieranordnung im Raum aus einem einzigen aufgenommenen zweidimensionalen Bild der Markieranordnung, die mittels einer optischen Bilderfassungseinheit (bspw. einer Kamera, insbesondere einer digitalen Kamera) aufgenommen wird.

Die DE 10 2014 012 693 B4 beschreibt ein zuverlässig arbeitendes, aber aufwendiges System und Verfahren. Die Positions- und Lagebestimmung erfolgt auf der Basis eines einzigen zweidimensionalen Bildes einer mit mindestens sieben Markierungen versehenen Markieranordnung, die an dem Objekt angebracht wird. Das System umfasst ferner eine Bilderfassungseinheit zur Aufnahme eines zweidimensionalen Bildes des Objekts bzw. der am Objekt angeordneten Markieranordnung und eine Auswerteeinheit zur eindeutigen Bestimmung der Lage und der Position des Objekts auf der Basis des aufgenommenen Bildes. Die sieben Markierungen der Markieranordnung stehen in einer fest vorgegebenen räumlichen Beziehung zueinander, wobei sechs dieser Markierungen eine Ebene bilden, während die siebte Markierung außerhalb bzw. beabstandet von jener Ebene angeordnet ist. Die sechs Markierungen sind in Gruppen eingeteilt, die auf zwei verschiedenen Geraden liegen, die sich in einem Winkel von 90°, schneiden. Die erste Gerade umfasst zumindest vier Markierungen, und die zweite Gerade umfasst zumindest zwei weitere Markierungen. Die siebte Markierung außerhalb der Ebene liegt in einer Draufsicht auf die Ebene auch auf dieser ersten Geraden, und zwar auf einer Seite der zweiten Gerade, die zumindest zwei Markierungen der ersten Gerade abgewandt ist. Dies ist für eine eindeutige Zuordnung der Bildmarkierungen, d.h. der in dem Bild abgebildeten Markierungen, und damit der Rekonstruktion von Lage und Position der Markierungen im Raum wichtig. Bei der Auswertung werden mehrere Homografien für mögliche Zuordnungen berechnet. Aus diesen Homografien wird jeweils eine Lagebestimmung rekonstruiert. Aufbauend hierauf wird für jede Lagebestimmung der durchschnittliche Reprojektionsfehler (im Vergleich zu der bekannten tatsächlichen Anordnung der Markierungen auf der Markieranordnung) für sämtliche Bildmarkierungen berechnet. Diejenige Homografie, die den geringsten Fehler aufweist, ist die zutreffende und wird für die eindeutige Lagebestimmung verwendet.

Diese Auswertung führt in der Praxis zu guten Ergebnissen, ist aber sehr aufwendig im Hinblick auf die Bildauswertung und Rechenleistung des Systems, insbesondere durch die Notwendigkeit, mehr als eine Homografie zu berechnen und durch jeweils Anwendung eines Levenberg-Marquardt-Lösers eine Lage zu schätzen. Ferner werden Reproduktionsfehler für die koplanaren Markierungen und die nicht koplanare Markierungen berechnet und die übereinstimmenden Minima für die Lageauswertung herangezogen. Diese aufwendige Berechnung, und insbesondere die Berücksichtigung der hohen Anzahl von Markierungen, führt zu Problemen beim Live-Tracking von schnell bewegten Objekten, weil die Rechenleistung von in der Praxis eingesetzten Systemen nicht ausreicht, insbesondere wenn in einem System nicht nur eine Markieranordnung überwacht wird, sondern eine Mehrzahl von Markieranordnungen, ggf. sogar in einem Bild.

Theoretisch kann zwar jede Markieranordnung von anderen in dem Bild erfassten Markieranordnungen durch verschiedene Kennzeichnungen unterschieden werden. Die Auswertung der Umgebung der Markieranordnung im Bild führt aber beim Tracking von bewegten Objekten regelmäßig zu Mehrdeutigkeiten, wenn diese Markierungen (bspw. in Form von Aufklebern) optisch im Bild nicht genau erkennbar sind. Grundsätzlich wäre es auch denkbar, die Markierungen auf den Markieranordnungen geometrisch unterschiedlich anzuordnen. Dies führt aber zu einer komplexeren Auswertung vielen verschieden angeordneten Markierungen.

In der DE 20 2020 103 679 U1 wird eine ähnliche Vorrichtung zur Lage- und Positionserkennung mit Markierungen und Kommunikationselemente beschrieben, die auf zwei sich kreuzenden Gerade angeordnet sind, die entsprechend eine gemeinsame Ebene aufspannen. Eine weitere Markierung, die außerhalb dieser Ebene liegt, ist auf keiner der Gerade angeordnet. Mit einer solchen Anordnung ist eine einfachere Lage- und Positionserkennung ohne Anwendung von Homografien möglich. Die Auswertungsschritte zum Identifizieren der Markierungen sind aber immer noch aufwendig und erfordern einige Zeit.

Die EP 3 059 629 A1 beschreibt ein am Kopf montiertes Display mit einer Frontfläche und vier jeweils an einen Rand der Frontfläche anschließenden Seitenflächen. Auf jeder der Front- und Seitenflächen sind vier Leuchteinheiten entlang einer geraden Linie angeordnet, die für jede der verschiedenen Front- und Seitenflächen unterschiedliches Teilungsverhältnis zur Kennzeichnung der jeweiligen haben. Zwei weitere Leuchteinheiten, die auf jeder Fläche in verschiedenem Abstand von der Linie mit den vier Leuchteinheiten angeordnet sind, kennzeichnen die Richtung der Linie und die Zugehörigkeit zu einer der Flächen. Damit sind die verschiedenen Front- und Seitenflächen des Displays eindeutig identifizierbar. Eine Ermittlung der Lage und der Ausrichtung einer der Flächen des Displays im 3-dimensionalen Raum ist nicht möglich, weil alle Leuchteinheiten einer Fläche angeordnet sind.

In der US 5,227,985 wird eine Markieranordnung mit einer Markiereinheit mit 3 Leuchteinheiten und einer Markiereinheit mit 4 Leuchteinheiten beschrieben, die jeweils entlang einer Linie angeordnet sind. Die beiden Markiereinheiten sind nicht koplanar zueinander angeordnet. Eine Unterscheidung der Leuchteinheiten wird nicht beschrieben.

Im industriellen Umfeld ist es wünschenswert, bisweilen die Lage und Position von Markieranordnungen sehr schnell bestimmen zu können, um - gerade in Produktionslinien - real-time Anwendungen nutzen zu können. Dafür muss die Auswertung der Kamerabilder und die Lage- und Positionsbestimmung so schnell erfolgen, dass eine Anwendung direkt im Produktionsablauf, bspw. zur Bewegungskontrolle, möglich ist. Das Auffinden der Kreuzform der in einer Ebene angeordneten Markierungen ist aufwendig und verlangsamt die Lage- und Positionsbestimmung. Durch die Kreuzform aus Markierungen in einer Ebene ergeben sich auf vergleichsweise große plane Flächenbereiche der Markierung, die eine Anordnung von Markierungen in einem 360° Azimutwinkel erschweren, zumal es durch eine erhöhte Markierung zu Abdeckungen anderer Markierungen kommen kann. Dies führt je nach Blickwinkel der Kamera zu einer unterschiedlichen Erkennungsgenauigkeit.

Daher ist es Aufgabe der Erfindung für eine Vorrichtung zur Lage- und Positionserkennung der eingangs genannten Art eine vereinfachte Möglichkeit zur Lage- und Positionserkennung von Markiereinheiten zur Verfügung zu stellen, die eine schnelle Auswertung und hohe Genauigkeit und Erkennungsrate auch bei sehr unterschiedlichen Kamerablickwinkeln ermöglichen.

Diese Aufgabe wird durch eine Vorrichtung mit den Merkmalen des Anspruchs 1 und ein Verfahren mit dem Merkmalen des Anspruchs 6 gelöst. Dabei ist insbesondere vorgesehen, dass mindestens zwei der Markiereinheiten zu einer ersten Markiereinheitenart mit genau drei Markierungen gehört und mindestens eine andere der Markiereinheiten zu einer zweiten Markiereinheitenart mit genau zwei Markierungen und mindestens einem Kommunikationselement gehört. Das mindestens eine Kommunikationselement bei der zweiten Markiereinheitenart ist zwischen den beiden Markierungen angeordnet. Im Falle mehrerer Kommunikationselemente sind alle Kommunikationselement zwischen den beiden Markierungen angeordnet. Erfindungsgemäß soll keine Markiereinheit mit einer anderen Markiereinheit derselben Markieranordnung kollinear angeordnet sein, d.h. auf ein und derselben Geraden liegen.

Um eine gute Lageerkennung zu erreichen, sind mindestens eine der Markiereinheiten der ersten Markiereinheitenart und mindestens eine der Markiereinheiten der zweiten Markiereinheitenart nicht koplanar angeordnet. Die jeweils linearen Markiereinheiten können - je nach Einsatz und Anwendung - vergleichsweise frei in der Markieranordnung positioniert werden, wobei die einzelnen Markiereinheiten gemäß einer besonders bevorzugten Ausführungsform überlappungsfrei in der Markieranordnung angeordnet sind in dem Sinne, dass sich die Markiereinheiten nicht kreuzen. Diese Einschränkung vereinfacht die Zuordnung von in einem Bild erkannten Leuchtmitteln zu Markierungen, die für die Lage- und Positionserkennung herangezogen werden, erheblich.

Die Auswerteeinheit ist erfindungsgemäß zur Erkennung der Markiereinheiten der ersten Markiereinheitenart und der zweiten Markiereinheitenart ausgebildet. Hierdurch lässt sich die Markieranordnung schnell und mit einer einfachen Bildauswertung erkennen und ihre Position und Lage bestimmen. Dazu ist erfindungsgemäß vorgesehen, dass die Auswerteeinheit zur eindeutigen Bestimmung der Lage und der Position der Markieranordnung unter Verwendung ausschließlich der Markierungen von erkannten Markiereinheiten der ersten Markiereinheitenart und der zweiten Markiereinheitenart eingerichtet ist. Dies ermöglicht, alleine auf Grundlage weniger bekannter Muster in dem aufgenommenen Bild, die der ersten oder der zweiten Markiereinheitenart entspricht, sehr flexibel auch unterschiedliche Anordnungen der Markiereinheiten zu erkennen, bspw. auch solche, die um ein Objekt herum angeordnet sind und eine Lage- und Positionserkennung aus jedem Blickwinkel, insbesondere Azimutwinkel, ermöglichen.

Gemäß einer bevorzugten Ausführungsform sind die Markierungen jeweils der ersten und der zweiten Markiereinheitenart für alle Markieranordnungen der Vorrichtung gleich. Das heißt insbesondere, dass die Markierungen in den Markiereinheiten der ersten Markiereinheitenart und in den Markiereinheiten der zweiten Markiereinheitenart jeweils an derselben Position angeordnet sind. Im Hinblick auf die Markierungen sind alle Markiereinheiten der ersten Markiereinheitenart und alle Markiereinheiten der zweiten Markiereinheitenart gemäß einer bevorzugten Ausführungsform also identisch. Hierdurch wird gerade in Systemen bzw. Vorrichtungen mit einer Vielzahl von Markieranordnungen erreicht, dass derselbe Algorithmus zur Bestimmung der Lage und Position der Markierungen der Markieranordnungen verwendet werden kann. Eine Unterscheidung der verschiedenen Markieranordnungen erfolgt dann über die Kommunikationselemente, die (bspw. aufgrund einer in der Vorrichtung einmaligen relativen Anordnung) eine eindeutige Identifikation erlauben. Diese Kommunikationselemente sind in den Markiereinheiten der zweiten Markiereinheitenart in der Weise vorgesehen, dass eine Kodierung der Kommunikationselemente relativ zu den die Kommunikationselemente einschließenden Markierungen für alle Markiereinheiten der zweiten Art, die in derselben Vorrichtung betrieben werden, verschieden sind.

Die Unterschiede von Markierungen und Kommunikationselementen, die als Hardware ggf. durch die gleichen Leuchtmitteleinrichtungen realisiert sein können, ergeben sich in den Auswerteeinheiten dadurch, dass die Anordnung der Leuchtmitteleinrichtungen in der Auswerteeinheit für jede der Markiereinheitenarten bekannt ist, d.h. die Positionen der Leuchtmitteleinrichtungen relativ zueinander bekannt sind und jeder Position die Funktion "Markierung" oder "Kommunikationselement" zugewiesen ist bzw. werden kann. Gemäß einer erfindungsgemäß besonders bevorzugten Ausführungsform ist genau einer Position der Leuchtmittelrichtungen in jeder der Markiereinheitenarten nur genau eine der Funktionen "Markierung" oder "Kommunikationselement" zugewiesen, d.h. es findet keine Doppelzuweisung von Funktionen statt.

Gemäß einer bevorzugten Ausführungsform der Erfindung kann eine Markiereinheit der zweiten Markiereinheitenart bis zu sieben aktive Leuchtmittel aufweisen, d.h. Markierungen und/oder Kommunikationselemente, wobei ggf. mehr Leuchtmitteleinrichtungen vorgesehen sein können. Die Markiereinheiten einer bevorzugten Ausführungsform sind im Betrieb aber dazu eingerichtet, dass nicht mehr als drei bis fünf aktive Leuchtmittel im Betrieb aktiviert sind.

Die Anzahl der Markierungen (aktive Leuchtmittel mit der Funktion "Markierungen") ist auf höchstens drei begrenzt. Je mehr Markierungen vorgesehen sind, desto länger dauert die Ermittlung der Position und Lage der Markierungen. Entsprechend ist vorgesehen, dass Markiereinheiten der ersten Markiereinheitenart genau drei Leuchtmitteleinrichtungen und genau drei Markierungen aufweisen.

Entsprechend einer weiteren Ausführungsform, die bevorzugt mit der vorstehenden Ausführungsform kombiniert werden kann, können die Markiereinheiten der zweiten Markiereinheitenart zwischen 6 und 14 Leuchtmitteleinrichtungen ausweisen, vorzugsweise zwischen 8 bis 12 und besonders bevorzugt 10, von den genau zwei als Markierungen und zwischen 2 bis 5 als Kommunikationselemente genutzt werden. Vorzugsweise unterschieden sich alle in einem System bzw. einer Vorrichtung verwendeten Markiereinheiten der zweiten Art durch die Anordnung ihre Kommunikationselemente. Damit ist gemeint, dass in jeder Markiereinheit der zweiten Markiereinheitenart unterschiedliche Leuchtmitteleinrichtung als Kommunikationselemente aktiviert sind, zumindest um eine Identifikation zu ermöglichen.

In einer bevorzugten Ausführungsform ist es auch möglich, dass die lineare Anordnung von Leuchtmitteln in der ersten und der zweiten Markiereinheitenart unterschiedlich lang ist. Bspw. kann die lineare Anordnung von Leuchtmitteln in der zweiten Markiereinheitenart kürzer sein als in der ersten Markiereinheitenart. Die ersten und der zweiten Markiereinheit sind durch eine Linie aus mindestens drei Leuchtmitteln gebildet, wobei die Linie an jedem Ende durch Endleuchtmittel begrenzt wird, denen die Funktion einer "Markierung" zugewiesen ist (Endmarkierung). Zwischen den Endmarkierungen ist in jeder Markiereinheitenart auf der die Endleuchtmittel verbindenden Linie mindestens ein weiteres Leuchtmittel angeordnet. In einer bevorzugten Ausführungsform ist die Linie der ersten Markiereinheitenart länger als die Linie der zweiten Markiereinheitenart. Dies kann insbesondere bei der Lageerkennung der Markierungen vorteilhaft ausgenutzt werden.

Mehr Kommunikationselemente erhöhen die Anzahl der pro Zeiteinheit kommunizierbaren Daten. Dies kann ausgenutzt werden, wenn die Kommunikationselemente zusätzlich zur Identifizierung der Markieranordnung auch für eine Übertragung weiterer Daten, bspw. in einem Zeit-Multiplexverfahren, verwendet werden. Damit wächst aber auch die Anzahl der unterschiedlichen Kommunikationsmuster, was das Auslesen der Dateninformation aus dem Kommunikationsmuster verlängert. Außerdem erhöht die Anzahl der aktiven Leuchtmittel (Markierungen und/oder Kommunikationselemente) den Stromverbrauch je Markiereinheit und Markieranordnung. Häufig ist eine größere Anzahl von Kommunikationselementen nicht notwendig, insbesondere wenn die Kommunikationselemente nur dafür verwendet werden, die Markieranordnung und/oder die Markiereinheit zu identifizieren. Mindestens zwei Kommunikationselemente und genau zwei Markierungen in den Markiereinheiten der zweiten Markiereinheitenart erleichtern die Unterscheidbarkeit von Markiereinheiten der beiden Markiereinheitenarten.

Da gemäß einer besonders bevorzugten Ausführungsform der Erfindung die Energieversorgung der Markiereinheiten (und auch der mehrere Markiereinheiten umfassenden Markieranordnungen) über wieder aufladbare Akkumulatoren erfolgt, ist eine Begrenzung auf drei aktive Markierungen je Markiereinheit besonders vorteilhaft. Sofern die Markiereinheiten bspw. an ein einem größeren Werkstück festgelegt werden, können diese auch an die Energieversorgung des größeren Werkstücks (bspw. einem ohnehin elektrisch arbeitenden Werkzeug) angeschlossen werden. In diesem Fall ist die Energieversorgung nicht maßgeblicher Faktor, der die Anzahl der optisch aktiven Markierungen und/oder Kommunikationselemente im Gebrauch begrenzt. Allerdings ist eine entsprechende Energieversorgungsschnittstelle im Falle nicht mit Akkumulatoren ausgerüsteter Markieranordnungen respektive eine Ladeschnittstelle, bspw. ein kabelgebundener Ladeanschluss oder eine kabellose Lademöglichkeit, etwa Form einer induktiven Ladeschnittstelle, zum Aufladen eines Akkumulators notwendig. Dies ist in der Herstellung und der Wartung aufwendiger.

Mit der erfindungsgemäß beanspruchten Anordnung von Markiereinheiten in der Markieranordnung ist es möglich, aus den in dem zweidimensionalen Bild mit einer kalibrierten Kamera (im Sinne einer optischen Bilderfassungseinheit der Erfindung) aufgenommenen Markierungen auf die Position und Lage der Markieranordnung im Raum zurückzurechnen. Hierzu gibt es diverse, dem Fachmann bekannte Lösungen. Dazu zählen Lösungsverfahren wie P3P (Perspective-3-Point), insbesondere bekannte algebraische Lösungsalgorithmen für das perspektivische 3-Punkt-Problem (AP3P-Verfahren) oder iterative Lösungsalgorithmen für das perspektivische 3-Punkt-Problem (iterative P3P), die dem hier einschlägigen Fachmann bekannt sind und bspw. in den Veröffentlichungen AP3P: Tong Ke and Stergios Roumeliotis. An efficient algebraic solution to the perspective-three-point problem. In Computer Vision and Pattern Recognition (CVPR), 2017 IEEE Conference on. IEEE, 2017, P3P: Xiao-Shan Gao, Xiao-Rong Hou, Jianliang Tang, and Hang-Fei Cheng. Complete solution classification for the perspective-three-point problem. Pattern Analysis and Machine Intelligence, IEEE Transactions on, 25(8):930-943, 2003 beschrieben sind. Diese bekannten Algorithmen finden, sofern die zuvor definierten Bedingungen eingehalten sind, die Position und Lage eines Objekts im Raum aus den Korrespondenzen von bekannten Relationen zwischen Markierungen auf dem Objekt und deren zweidimensionaler Aufnahme in dem Bild einer kalibrierten Kamera.

Um diese Algorithmen robuster gegen Ausreißer in der Punktrekonstruktion in den Bildern zu machen, werden sogenannte RANSAC-Verfahren (Random Sample Consensus) eingesetzt, die erste Korrelationen zwischen im Bild ermittelten Markiereinheiten (der ersten und der zweiten Markiereinheitenart) herstellen. Diese ersten Korrelationen können iterativ verbessert werden, bis die Gesamtheit der im Bild erkennbaren Relationen zwischen den ermittelten Markiereinheiten bekannt sind, und damit die Markiereinheit. Mit dieser Information können die Relationen der Markierungen zueinander ausgewertet werden, und daraus die Position und Lage der Markieranordnung im Raum bestimmt werden. Das RANSAC-Verfahren ist eine iterative Methode zur Schätzung von Parametern eines mathematischen Modells aus einem Satz beobachteter Daten, die Ausreißer enthalten, wenn Ausreißer keinen Einfluss auf die Werte der Schätzungen haben sollen. Daher kann sie auch als Ausreißer-Erkennungsmethode interpretiert werden. Eine Erläuterung dieses Algorithmus findet sich bspw. in der Veröffentlichung Martin A. Fischler, Robert C. Bolles: Random Sample Consensus: A Paradigm for Model Fitting with Applications to Image Analysis and Automated Cartography, Communications of the ACM, June 1981, https://doi.org/10.1145/358669.358692 .

Die Anwendung dieser Verfahren ist dem Fachmann bekannt. Sie können in der beschriebenen Weise auf die vorliegende Erfindung angewandt und ggf. im Rahmen einer fachmännischen Optimierung angepasst werden.

Grundsätzlich ist die Erfindung von der konkreten Art der (in der Fachwelt schon bekannten) Algorithmen zur Lage- und Positionserkennung unabhängig.

Der besondere Vorteil der erfindungsgemäß vorgeschlagenen Markieranordnung liegt darin, dass mit einfach und klar aufgebauten Markieranordnungen eine Ermittlung der Position und Lage der Markieranordnung (bezogen auf übliche industrielle Fertigungs- und Montageprozesse, medizinische Anwendungen bspw. im Rahmen von ferngesteuerten endoskopisch durchgeführten Operationen oder vergleichbaren Anwendungen, bspw. bei der Überprüfung von industriellen Bauteilen, de facto (d.h. relativ auf die menschlichen Bewegungsabläufe) in Echtzeit möglich ist, so dass auch ein Tracking der Markieranordnungen in Echtzeit möglich ist. Dies ermöglicht das Verfolgen einer Bewegung der mit den Markieranordnungen versehenen Werkzeuge, Geräte oder Körperteile in Echtzeit.

In vielen Anwendung reicht die Auswertegeschwindigkeit auch für durch einen Manipulator (gesteuerte mechanische Bewegungseinrichtung, umgangssprachlich auch als Roboter bezeichnet) ausgeführte Bewegungen, so dass die Erfindung universell einsetzbar ist. Aufgrund der Einfachheit des Aufbaus und der Flexibilität ist die Auswertung der Bildpunkte einschließlich Lage und Positionserkennung im Vergleich zum Stand der Technik einfacher und schneller. Anders als die aus dem Stand der Technik bekannte Kreuzform lassen sich auch leicht 360°-Positionserkennungen erreichen, bspw. durch eine Anordnung der Markiereinheiten auf einer Art Zylinderoberfläche. Ein wichtiger Vorteil der Erfindung liegt gerade darin, dass unabhängig von dem Azimutwinkel um die Symmetrieachse der Anordnung (also etwa die Zylinderachse bei einer Anordnung auch der Zylinderoberfläche) die aufgenommenen Bilder vergleichbar sind und sich eine gleichbleibende Genauigkeit über den gesamten Azimutwinkel von 360° ergibt. Dies gilt insbesondere bei einer bevorzugten Anordnung der geradlinigen Markiereinheiten, bei der es zu keinem Kreuzungspunkt zwischen den Markiereinheiten kommt.

Gemäß einer bevorzugten Ausführungsform der Erfindung weist die Markieranordnung (im Sinne von eine, mehrere oder jede der mindestens einen Markieranordnung der Vorrichtung) mindestens zwei Markiereinheiten der ersten Markiereinheitenart und mindestens eine Markiereinheit der zweiten Markiereinheitenart auf, die in einer der Auswerteeinheit bekannten, festen Anordnung relativ zueinander festgelegt sind.

In einer bevorzugten Ausführungsform weist die Markieranordnung genau zwei Markiereinheiten der ersten Markiereinheitenart und genau eine Markiereinheit der zweiten Markiereinheitenart auf, in dem Sinne, dass keine weiteren Markiereinheiten oder Markierungen in Markiereinheit vorgesehen sind. Vorzugsweise gilt dies für alle Markieranordnungen der Vorrichtung, so dass die Lage der Markierungen in allen Markieranordnungen gleich ist und sich jede vorzugweise Markieranordnung der Vorrichtung von einer anderen Markieranordnung der Vorrichtung durch (nur) durch die Kommunikationselemente der genau einen enthaltenen Markiereinheit der zweiten Markiereinheitenart unterscheidet. Mehrere dieser Markieranordnungen können in einer gemeinsamen Struktur, bspw. in einem Rahmen oder in einem Gehäuse, relativ zueinander fest angeordnet sein und gemeinsam eine Multi-Markieranordnung bilden, in der also mehrere Markieranordnungen relativ zueinander fest angeordnet sind. Durch die immer gleiche Struktur der Markieranordnungen, in der alle zur Lage- und Positionserkennung verwendeten Leuchtmittel (d.h. die Markierungen) identisch angeordnet sind, kann ein besonders effektiver und schneller Algorithmus zur Lageerkennung verwendet werden.

Es ist aber auch eine Ausführung einer erfindungsgemäßen Markieranordnung denkbar, in der zwischen zwei Markiereinheiten der ersten Art immer mindestens eine Markiereinheit der zweiten Art liegt. Wenn mehr Markiereinheiten der zweiten Markiereinheitenart nebeneinander in der Markieranordnung angeordnet sind, kann die Kommunikationsrate signifikant erhöht werden, bspw. wenn vielen verschiedenen Markieranordnungen in einem großen System (einer großen erfindungsgemäßen Vorrichtung) zusammen betrieben werden müssen oder Bedarf für eine hohe Datenübertragungsrate besteht, bspw. weil viele zusätzliche Informationen übertragen werden müssen, sei es durch eine Datenübertragung mit nur einer Kodierung oder mehrerer in Folge dargestellter Kodierungen verschiedener Kodierungen, in denen die Dateninformationen nacheinander übertragen werden. Eine weitere Ausführungsform kann vorsehen, dass auf einem Körper mit einer nicht planen Oberfläche, bspw., einem Zylinder, einem Konus oder einer anderen grundsätzlich beliebigen Form, mehrere Markiereinheiten der ersten und der zweiten Art derart angeordnet sind, dass zumindest jeweils eine Markiereinheit erster Art und eine Markiereinheit zweiter Art (in einer sich regelmäßig wiederholden oder beliebigen Anordnung) benachbart zueinander angeordnet sind und ein einer Aufnahme sichtbar sind. Bei der parallelen Anordnung von Markiereinheiten, bspw. auf einer Zylinderoberfläche, sind vorzugweise zwei Markiereinheiten erster Art benachbart zu einer Markiereinheit zweiter Art so anordnet, damit nicht alle Markiereinheiten koplanar zueinander liegen. Eine bevorzugte Ausführungsform dieser Art kann die Anordnung auf einer Zylinderkörperoberfläche sein, in der die parallel angeordneten Markiereinheiten erster und zweiter Art über die gesamte Oberfläche oder zumindest abschnittsweise (bezogen auf den Umfang) entlang der Zylinderachse angeordnet sind.

In einer besonders bevorzugten Ausführungsform der Markieranordnung, bspw. einer Ausführungsform mit genau drei Markiereinheiten (zwei der ersten Art und eine der zweiten Art), sind liegen die Linien der Leuchtmittel der Markiereinheiten der ersten Markiereinheitenart in einer gemeinsamen Ebene, vorzugweise derart, dass die Linien der Leuchtmittel zwei einander gegenüberliegende Seiten eines Parallelogramms bilden. Die Endmarkierungen jeder der Markiereinheiten, in denen die Linien der Leuchtmittel enden, bilden einen Eckpunkt. In einer besonders bevorzugten Ausführungsform können die die Lichtmittel (Eckpunkte) verbindenden Linien ein Rechteck mit jeweils einer Endmarkierung in den Ecken des Rechtecks bilden. Weiter kann die Linie der Markiereinheit der zweiten Markiereinheitenart kürzer sein als die ersten Markiereinheitenart, d.h. der Abstand der Endmarkierungen kann bei der zweiten Markiereinheitenart kürzer sein als bei der ersten Markiereinheitenart. In einer solchen Ausführungsform kann dann die Markiereinheit der zweiten Markiereinheitenart innerhalb des Parallelogramms oder Rechtecks angeordnet sein, das durch die Markiereinheiten der ersten Markiereinheitenart aufgespannt wird, oder allgemeiner innerhalb der Flächenform, die durch ein Verbinden der Endmarkierungen der Markiereinheiten der ersten Markiereinheitenart gebildet wird. Dies erleichtert das Auffinden von Markierungen in dem einen Bild der Markieranordnung, in dem anhand derer dann die Positions- und Lageerkennung durchgeführt wird.

Die Markiereinheit der zweiten Markiereinheitenart ist außerhalb einer Ebene angeordnet sein, die durch zwei Markiereinheiten der zweiten Markiereinheitenart aufgespannt, insbesondere erhöht bezogen auf bezogen auf diese Ebene. Die erhöhte Anordnung bezieht auf die Anordnung der Leuchtmittel der Markiereinheiten in einer Blickrichtung senkrecht auf die (durch die Markiereinheiten erster Art aufgespannte) Ebene, wobei die Leuchtmittel sichtbar sind. In einer solchen Anordnung liegen die Markierungen der Markiereinheit zweiter Markiereinheitenart also sicher nicht koplanar zu den Markierungen der Markiereinheiten erster Markiereinheitenart. Dies verbessert die Genauigkeit bei der Lage- und Positionserkennung. Gemäß einer bevorzugten Ausführungsform kann die Linie der Leuchtmittel der zweiten Markiereinheitenart aber in einer parallelen Ebenen zu der durch die Markierungen der ersten Markiereinheitenart aufgespannten Ebene liegen. Dies erleichtert insbesondere die Lageermittlung der Markierungen im Raum.

Die Erfindung sieht vor, dass die geraden Linien der Leuchtmittel der Markiereinheiten der Markieranordung parallel angeordnet sind. Dies wird in diesem Text auch verkürzt als parallele Anordnung von Markiereinheiten bezeichnet. Diese Aussage ist synonym zu verstehen. Damit ist gemeint, dass Geraden entlang der (geraden) Linie der Leuchtmittel aller Markiereinheiten einer Markieranordnung, insbesondere der Markieranordnung mit genau zwei Markiereinheiten der ersten Markiereinheitenart (nach synonym auch "Markiereinheiten erster Art") und genau einer Markiereinheit der zweiten Markiereinheitenart (nach synonym auch "Markiereinheiten zweiter Art"), sich nicht schneiden. Die Geraden sind dabei nicht im mathematischen Sinne als unendlich lang zu verstehen, sondern als verlängerte Linien der Anordnung der Geraden, die sich über eine vorgegebene Länge nicht schneiden. Auch Linien, die einem kleinen Winkel von bspw. bis zu 5° zueinander ausgerichtet sind, gelten im Sinne der Erfindung noch als parallel. Dies schließt insbesondere Fertigungstoleranzen mit ein.

Die parallele Anordnung aller Markiereinheiten einer Markieranordnung stellt ein sehr effektives Kriterium für die Auswahl von zu einer Markiereinheit gehörenden Markieranordnungen dar und ist eine sehr präzise Randbedingung bei der Anwendung von Algorithmen zur Positions- und Lageerkennung. Besonders bevorzugt kann die Markiereinheit zweiter Art zwischen den Markiereinheiten erster Art angeordnet sein, was eine Zuordnung der Markierungen besonders einfach macht. Die Erfindung ist aber nicht auf diese bevorzugte Ausführungsform beschränkt, die aber insbesondere bei genau drei Markiereinheiten in einer Markieranordnung sehr sinnvoll sein kann.

Grundsätzlich kann vorgeschlagen werden, dass in der Markieranordnung benachbart zu einer Markiereinheit der zweiten Markiereinheitenart (in der gesamten Markieranordnungen oder nur in Abschnitten der Markieranordnung) eine Markiereinheit der ersten Markiereinheitenart angeordnet ist, wobei eine benachbarte Anordnung meint, quer zur Längsrichtung einer Markiereinheit zumindest auf einer der beiden Seiten eine, bevorzugt auch auf beiden Seiten je eine Markiereinheit der ersten Markiereinheitenart auch in Längsrichtung angeordnet ist. In Längsrichtung soll insbesondere bedeuten, dass der (betragsmäßig kleinste) Winkel zwischen den Linien der Markiereinheiten der ersten und der zweiten Art weniger als 45° beträgt und die (in Querrichtung zu den Linien nebeneinanderliegenden) Linien zu mindestens 50% (in Längsrichtung der Linien) überlappen.

Die parallele Anordnung aller Markiereinheiten einer Markieranordnung gilt auch, wenn - wie bereits beschrieben - mehrere Markieranordnungen zu einer gemeinsamen Struktur zusammengefasst sind und so eine Multi-Markieranordnung bilden. Die Erfindung ist darauf jedoch nicht beschränkt, und lässt grundsätzlich eine freie Zahl von Markiereinheiten der ersten und/oder der zweiten Markiereinheitenart in einer Markieranordnung zu, ohne dass die eine Markieranordnung mehrfach in einer Multi-Markieranordnung angeordnet ist. In einer räumlichen Anordnung die Markeinordnung besonders bevorzugt einen konvexen Körper bilden, so wie er nachstehend auch für eine weitere Ausführungsform beschrieben ist.

Entsprechend können gemäß einer Ausführungsform der Erfindung mehrere Markieranordnungen mit mindestens zwei Markiereinheit der ersten Art und einer Markiereinheit der zweiten Art zu einer gemeinsamen Struktur zusammengefasst werden, in der die einzelnen Markieranordnungen definiert zueinander angeordnet sind und eine Multi-Markieranordnung bilden, wobei die Außenkontur der gemeinsamen Struktur einen konvexen Körper bildet.

Eine geometrisch einfache Möglichkeit sieht vor, dass die in jeder Markiereinheit auf der geraden Linie angeordneten Markierungen (oder entsprechend alle Leuchtmittel) auf einer Hülle mit runden, elliptischen oder ähnlich gekrümmten Querschnitt liegen, wobei alle Linien mit den Leuchtmitteln in der senkreckt zu der Querschnittsfläche verlaufenden Axialrichtung der Hülle parallel zueinander ausrichtet sind. Dies ist beispielsweise der Fall, wenn alle Linien mit den Leuchtmitteln (Markierungen oder Kommunikationselemente) auf einer Zylinderhülse in Axialrichtung der Zylinderhülse, d.h. parallel zueinander angeordnet sind. Dies ergibt einen konvexen Körper.

Ein konvexer Körper liegt im Sinne der Erfindung dann vor, wenn eine geradlinige Verbindung zwischen zwei nicht unmittelbar benachbarten oder zwei nicht kollinear in derselben Markiereinheit angeordneten Markierungen (oder ggf. sogar Leuchtmitteln) innerhalb oder entlang der Außenkontur des Körpers verläuft. Wenn die Form des Körpers nicht so klar ist wie bei einem bspw. zylinderförmigen Körper, kann die Außenkontur daraus gebildet werden, dass jeweils die drei Markierungen (oder Leuchtmittel), die den kürzesten Abstand zueinander aufweisen, durch eine Dreieckfläche verbunden werden. Hierdurch wird in jedem Fall eine Außenkontur gebildet, anhand derer das Vorliegen einer konvexen Außenkontur geprüft werden kann. In Randbereichen, bspw. an Stirnseiten des Körpers, verbleibende Öffnungen werden durch dreieckige ausgehend von Schnittpunkten der einzelnen Konturflächen geschlossen. Derartige Multi-Markieranordnungen können um beliebige Körper herum angeordnet werden, wobei die konvexe Körperform eine optimale Sichtbarkeit der für die Lage- und Positionsbestimmung verwendeten Markierungen garantiert.

Entsprechend einer bevorzugten Ausführungsform ist die Auswerteeinheit zur Durchführung eines nachfolgend beschriebenen Verfahrens oder Teilen davon eingerichtet. Insbesondere können das nachfolgend beschriebene Verfahren oder bestimmte Ausführungsformen davon für spezielle der vorbeschriebenen Ausführungsformen besonders geeignet sein.

Die Erfindung bezieht sich daher auch auf ein Verfahren zur Lage- und Positionserkennung von Markierungen im dreidimensionalen Raum, insbesondere unter Verwendung einer der Ausführungsformen der vorbeschriebenen Vorrichtung, in denen die Auswerteeinheit zur Durchführung des Verfahrens oder von Verfahrensteilen eingerichtet ist. Das Verfahren umfasst erfindungsgemäß insbesondere die folgenden Schritte, die in der nachbeschriebenen Reihenfolge ausgeführt werden können. Sofern technisch möglich, kann die Reihenfolge aber auch getauscht werden, ohne den Gegenstand der Erfindung zu verlassen.
- Aufnehmen eines Bildes mindestens einer Markieranordnung mit mindestens zwei Markiereinheiten einer ersten Markiereinheitenart und mindestens einer Markiereinheit einer zweiten Markiereinheitenart, die jeweils mindestens drei entlang einer Linie angeordnete, optisch aktiven Leuchtmittel aufweisen. Die Markiereinheiten erster Art weisen eine feste Anzahl von Leuchtmitteln, nämlich drei, auf, die in jeder Markiereinheit an der identischen Position angeordnet sein können und die Funktion von Markierungen haben. Die Markiereinheiten zweiter Art weisen bei den in einer Linie angeordneten Leuchtmitteln an den beiden gegenüberliegenden Enden als Markierungen dienende Leuchtmittel (auch als Endmarkierungen bezeichnet) auf. Alle anderen Leuchtmittel der Markiereinheiten zweiter Art, die zwischen den beiden Markierungen angeordnet sind, dienen als Kommunikationselemente, die erfindungsgemäß bevorzugt für jede Markiereinheit der zweiten Art unterschiedlich angeordnet sein können, insbesondere durch optisches Aktivieren bzw. Anschalten jeweils unterschiedlicher Leuchtmitteleinrichtungen. Diese können auch so gewählt werden, dass die Markiereinheiten erster und zweiter Art durch die (optisch aktiven) Leuchtmittel unterscheidbar sind, aufgrund ihrer Position und/oder ihrer Anzahl, besonders bevorzugt zumindest durch ihre Anzahl. So können die Markiereinheiten zweiter Art bevorzugt zwischen genau zwei und fünf, d.h. genau zwei, drei, vier oder fünf, Kommunikationselemente und genau zwei Markierungen (jeweils am Anfang und Ende der Linie) aufweisen.
- Erkennen der Leuchtmittel in dem aufgenommenen Bild. Dabei werden - mittels üblicher Bilderkennungssoftware - die einzelnen Leuchtmittel als im Bild leuchtende Punkte erkannt und den Punkten in dem Bild eindeutige 2-dimensionale Bildkoordinaten (x_{B}, y_{B}), auch als Pixelkoordinaten bezeichnet, zugeordnet. Mit diesen Bildkoordinaten können dann nachfolgend weitere Auswertungen erfolgen. Beispiele hierfür werden noch beschrieben.
- Zuordnen von erkannten Leuchtmitteln zu mindestens einer Markiereinheit einer ersten Markiereinheitenart mit ausschließlich als Markierungen ausgebildeten Leuchtmitteln und Zuordnen von erkannten Lichtmitteln zu mindestens einer Markiereinheit einer zweiten Markiereinheitenart mit als Markierungen und Kommunikationselementen ausgebildeten Leuchtmitteln. Dies erfolgt durch Auswerten der Bildkoordinaten der erkannten Leuchtmittel und eine Bewertung, ob eine Auswahl bestimmter Leuchtmittel in dem Bild (d.h. deren Bildkoordinaten) zu der (in der die Schritte durchführenden Auswerteeinheit bekannten) Anordnung der Markierungen in der ersten oder zweiten Markiereinheitenart passt oder passen könnte. Dazu werden geeignete Selektionskriterien vorgegeben.
- Zuweisen der Funktion Markierung oder der Funktion Kommunikationselement zu den in dem Bild erkannten Leuchtmitteln. Dies kann insbesondere Aufgrund der Zuordnung der Leuchtmittel zu einer der beiden Markiereinheitenarten erfolgen.
- Bestimmung der Lage und der Position der Markieranordnung anhand der Markierungen, d.h. anhand der Leuchtmittel mit der zugewiesenen Funktion "Markierung", in Kenntnis der Anordnung der Markierungen auf der Markieranordnung respektive der Anordnung der Markierungen auf den Markiereinheiten und der Anordnung der Markiereinheiten in der Markieranordnung, was im Sinne der Erfindung gleichbedeutend ist. Dies kann erfindungsgemäß mit den bereits beschriebenen Algorithmen und RANSAC-Verfahren erfolgen.

Erfindungsgemäß bevorzugt kann das Zuordnen der Markiereinheiten zu der ersten oder der zweiten Markiereinheiten den Schritt beinhalten, alle in dem aufgenommenen Bild geraden Linien mit insgesamt genau drei Leuchtmitteln (d.h. insgesamt drei Markierungen und/oder Kommunikationselementen) zu ermitteln. Damit ist gemeint, dass alle genau drei in dem Bild sicher erkennbaren Leuchtmittel (Markierungen und/oder Kommunikationselemente), die in einer geraden Linie angeordnet sind, in einer Gesamtheit gerader Linien mit drei (optisch aktiven) Leuchtmitteln erfasst werden, unabhängig davon, ob sich bei den Leuchtmitteln um Markierungen oder Kommunikationselemente handelt. Diese Linien werden erfasst und können bspw. als 3-Tupel mit den Bildkoordinaten jeder der genau drei Markierungen / Kommunikationselemente in bspw. einer Liste geführt werden. Ein 3-Tupel beschreibt also eine in dem aufgenommenen Bild erkennbare gerade Linien mit drei Markierungen / Kommunikationselementen. Alle so ermittelten 3-Tupel bilden dann die Gesamtheit gerader Linien. Ein 3-Tupel hat bspw. die Form [x_{B}(1), y_{B}(1); x_{B}(2), y_{B}(2); x_{B}(3), y_{B}(3)], wobei die Zahlen in Klammern jeweils die Nummerierung der erkannten Leuchtmittel (Markierungen / Kommunikationselemente) sind. Die Linien enden bevorzugt jeweils in Leuchtmitteln, zwischen denen ein weiteres Leuchtmittel liegt. Die Leuchtmittel, in denen die Linien enden, werden auch als Endpunkte bezeichnet.

Finden sich in dem aufgenommenen Bild mehr als drei Markierungen oder Kommunikationselemente, die auf einer geraden Linie angeordnet sind, gilt jede mögliche Unterkombination mit genau drei Markierungen oder Kommunikationselementen (also drei Leuchtmitteln) als eine der ermittelten geraden Linien mit genau drei Markierungen / Kommunikationselementen und wird in der Gesamtheit der geraden Linien erfasst, bspw. in die Liste der 3-Tupel aufgenommen. Im Folgenden werden gerade Linien teilweise der Einfachheit halber nur als Linien bezeichnet. Diese Begriffe werden also synonym verwendet.

Bei einer erfindungsgemäß bevorzugten Vorrichtung, bei der die Länge der Markiereinheiten (respektive die Linien, auf denen die Leuchtmittel angeordnet sind) der ersten und der zweiten Markiereinheitenart näherungsweise gleich lang sind, d.h. sich um nicht mehr als bis zu 10%, vorzugweise bis zu 5%, unterscheiden, kann davon ausgegangen werden, dass trotz einer möglichen perspektivischen Verzeichnung bei der Bildaufnahme die Länge der Linien (respektive der Abstand zwischen den Endpunkten der Linien, die durch Endmarkierungen gebildet werden, in etwa gleich lang sind. Dies gilt insbesondere bei einer typischen Länge der Markiereinheiten im Bereich zwischen drei und fünfzehn Zentimetern, vorzugsweise zwischen drei und sechs Zentimetern und einem Abstand der Kamera (Bilderfassungseinheit) zu der aufgenommenen Markieranordnung von mehr als mindestens einem Meter, vorzugsweise zwischen zwei bis fünf oder zwei bis zehn Metern. Dies ist für typische Anwendungen üblich. In diesem Fall können als ein Selektionskriterium für Linien, die möglicherweise zu einer Markieranordnung gehören, aus der Gesamtheit der ermittelten geraden Linien diejenigen Linien ermittelt werden, bei denen der Abstand zwischen den Endpunkten der geraden Linien vergleichbar ist. Solche Linien können zu einem Paket zusammengestellt werden, wobei in einem Bild ggf. mehrere Pakete ermittelt werden können, insbesondere wenn mehrere verschiedene Markieranordnungen in einem Bild erkannt werden.

Bei einer erfindungsgemäßen Vorrichtung, bei der die Markiereinheiten (respektive die Linien, auf denen die Leuchtmittel angeordnet sind) parallel angeordnet sind, wird diese parallele Anordnung als ein Selektionskriterium für Linien verwendet, die möglicherweise zu einer Markieranordnung gehören. Aufgrund der perspektivischen Verzeichnung bei der Bildaufnahme kann natürlich nicht davon ausgegangen werden, dass sich die zu unendlichen langen Geraden im mathematischen Sinne verlängerten Linien in dem zweidimensionalen Koordinatensystem des Bildes nicht schneiden.

In einer ganz einfachen Auswertung können zumindest sich in dem Bildkoordinatensystem unmittelbar schneidende Linien als nicht parallel ausgeschlossen werden. In einer bevorzugten Variante bei der Anwendung dieses Selektionskriterium könnte geprüft werden, ob eine Verlängerung der Linie um einen bestimmten Verlängerungsfaktor, bspw. einen Verlängerungsfaktor 1,5 und 5 an einem oder beiden Enden, dazu führt, dass die verlängerten Linien sich schneiden. Auch in diesem Fall könnten solche sich als verlängerte Linien schneidende Linien als nicht parallel ausgeschlossen werden, wobei ein Verlängerungsfaktor auch parametrierbar sein kann, insbesondere abhängig von dem Anwendungsfall und/oder der Aufnahmegeometrie. Die Auswahl geeigneter Verlängerungsfaktoren, ggf. auch außerhalb des vorstehend erwähnten bevorzugten Bereichs, liegt im Griffbereich des Fachmanns. Auch solche Linien können zu einem Paket zusammengestellt werden.

Bei Anwendung derartiger Kriterien auf das Bild der Leuchtmittel, und insbesondere bei einer Kombination dieser Kriterien und/oder weiterer Kriterien, können so bereits Pakete von Linien alleine aufgrund einer Auswertung des Bildes der Leuchtmittel selektiert werden, die in der Praxis zu einer effektiven Vorauswahl von zu einer Markieranordnung gehörenden Leuchtmitteln führen. Eine Vorauswahl von Leuchtmitteln, die aufgrund ihrer Anordnung grundsätzlich als Leuchtmittel einer Markiereinheit in Frage kommen, erhöht die Auswertegeschwindigkeit erheblich, weil aufwendige Berechnungen zur Positions- und Lagebestimmung auf aussichtsreiche Gruppen von möglichen Markierungen beschränkt werden können. Dies erlaubt de facto Echtzeitanwendungen in erkannten Bewegungsabläufen, bspw. um zu ermitteln, wenn eine bestimmte Markierung eine bestimmte Position erreicht (Tracking).

Weitere Selektionskriterien können bei bekannter Anordnung und bekannter Anzahl von Markiereinheiten in einer Markieranordnung bestimmt werden. Wenn bspw. in einer Ausführungsform der Vorrichtung insgesamt drei Markiereinheiten in einer Markieranordnung zusammengefasst sind, wobei eine Markiereinheit der zweiten Markiereinheitenart jeweils von einer Markiereinheitenart der ersten Markiereinheitenart flankiert sind, können derartige Anordnungen von Linien in dem Bild gesucht werden. Es können aus den selektierten Paketen von Linien speziell die Linien ausgewählt werden, bei denen zwischen zwei Linien mit ähnlicher relativer Anordnung von Leuchtmitteln zumindest eine Linie mit verschiedener relativer Anordnung von Leuchtmitteln angeordnet ist. Die in der Mitte liegende(n) Linie(n) könnte(n) also eine Linie zweiter Markiereinheitenart sein, und die außenliegenden Linien könnten also Linien erster Markiereinheitenart sein. Als weiteres Kriterium für die Linien erster Markiereinheitenart kann auch ein relatives Verhältnis des Abstands der Leuchtmittel auf einer Linie sein, wenn die Markiereinheiten erster und zweiter Art sich so signifikant unterscheiden lassen. Linien, die ein derartiges Sortierkriterium erfüllen, können dann einer möglichen Markiereinheitenart zugewiesen werden. Dies gilt insbesondere, wenn alle Markiereinheiten gemäß einer besonders bevorzugten Ausführungsform der Erfindung eine grundsätzlich gleiche Anordnung von Markiereinheiten aufweisen.

Entsprechend einem allgemeineren Ansatz kann erfindungsgemäß vorgesehen werden, dass vor einer Zuordnung von ermittelten geraden Linien zu der ersten Markiereinheitenart eine Zuordnung von Linien zu der zweiten Markiereinheitenart erfolgt. Diese enthält Kommunikationselemente, anhand deren Anordnung eine eindeutige Identifikation der Markieranordnung erfolgen kann bzw. erfolgt. In der Auswerteeinheit sind erfindungsgemäß die in einem System eingerichteten Markieranordnungen mit der relativen Anordnung ihrer Markiereinheiten relativ zueinander bekannt.

Mit der Kenntnis der Anordnung der Markiereinheiten erster und zweiter Art in der identifizierten Markieranordnung können in dem aufgenommenen Bild Linien ermittelt werden, die zu der identifizierten Markieranordnung gehören können. So kann in der Umgebung einer Markiereinheit der zweiten Art gezielt nach zu dieser Markieranordnung gehörenden Markiereinheiten gesucht werden. Auch hierdurch lassen sich mögliche Markiereinheiten alleine durch eine Bildauswertung des aufgenommenen Bildes in der Praxis schnell und zuverlässig erkennen. Entsprechend kann gemäß einer besonders bevorzugten Ausführungsform vorgesehen sein, dass aus den ermittelten geraden Linien diejenigen Linien ausgewählt werden, die zu einer Markiereinheitenart der zweiten Markiereinheitenart gehören, und aus den Kommunikationselementen der zweiten Markiereinheiten eine Identifikation der Markieranordnung abgeleitet wird. Damit sind der Aufbau der Markiereinheit und die Anordnung von Markierungen auf der Markiereinheit bekannt.

In einer besonders bevorzugten Ausführungsform kann daher vorgesehen sein, ausgehend von Markierungen der Markiereinheit zweiter Markiereinheitenart Suchbereiche in dem aufgenommenen Bild zu definieren, in denen nach Markierungen gesucht wird. Finden sich an in den Suchbereichen in dem aufgenommenen Bild Leuchtmittel werden diese der Markiereinheit als Markierungen zugeordnet und können bei der Ermittlung von Lage- und Position verwendet werden.

In einer einfachen Ausführungsform können Linien zweiter Markiereinheitenart dadurch erkannt werden, dass diese ein signifikant anderes Verhältnis in der Anordnung der Leuchtmittel zueinander aufweisen als Linien der ersten Markiereinheitenart.

Eine einfachere und sichere Möglichkeit zur Erkennung ergibt sich, weil die Markiereinheiten zweiter Markiereinheitenart (genau) zwei Markierungen als Endmarkierungen der Linie von Leuchtmitteln, mindestens zwei Kommunikationselemente aufweisen, die auf der Linie zwischen den Markierungen angeordnet sind und die (genau) zwei Markierungen, d.h. die Endmarkierungen, bei allen Markiereinheiten zweiter Art in der Vorrichtung (also einem Gesamtsystem bzw. einer Installation) gleich sind. Die zwischen den (End-)Markierungen vorgesehenen Kommunikationselemente sind dagegen für jede Markiereinheit in dem System unterscheidbar unterschiedlich.

Diese Markiereinheiten zweiter Art können erfindungsgemäß einfach dadurch ermittelt werden, dass aus den ermittelten geraden Linien diejenigen Linien ausgewählt werden, die dieselben Endpunkte (respektive erkannte Leuchtmittel) in dem aufgenommenen Bild aufweisen. Bei mindestens zwei Kommunikationselementen finden sich entsprechend mindestens zwei Linien mit denselben Endpunkten und verschiedenen Leuchtmitteln auf der Linie zwischen den Endpunkten. Den Endpunkten (Leuchtmitteln) wird entsprechend die Funktion "Markierung" und den zwischen den Endpunkten angeordneten Leuchtmitteln die Funktion "Kommunikationselement" zugeordnet. So kann aus dem einen Bild die Markiereinheit zweiter Art mit der Kodierung der Kommunikationselemente rekonstruiert und die Kodierung ausgelesen werden, bspw. durch Vergleich mit bekannten Mustern der Kodierung. Dies ist alleine aus dem aufgenommenen Bild möglich, ohne dass eine Lage- und/oder Positionserkennung durchgeführt werden muss.

Die Kommunikationselemente könnten eine eindeutige Kennung (Identifikation) dieser Markiereinheit anzeigen, über die bspw. die Markieranordnung eindeutig identifizierbar ist. Darüber hinaus kann über die Kommunikationselemente erfindungsgemäß auch eine Kommunikation weiterer Informationen, ggf. in mehreren aufeinander folgenden aufgenommenen Bildern mittels kodierter Daten, die in der Auswerteeinheit zusammengesetzt und dekodiert werden. Diese Informationen können bspw. Informationen zu Werkzeugen enthalten, an denen eine Markiereinheit festgelegt ist, wie bspw. einen Akkustand des Werkzeugs, durch das Werkzeug ausgeführte Funktionen oder detektierte Datenwerte. Konkrete Möglichkeiten hierzu sind dem Fachmann bspw. aus der DE 10 2019 114 531 A1 bekannt.

Gemäß einer bevorzugten Ausführungsform der Erfindung kann nach dem Ermitteln einer zu der zweiten Markiereinheitenart gehörenden geraden Linie in Kenntnis der Anordnung der Markiereinheiten der nun identifizierten Markieranordnung ein Suchbereich definiert werden, in dem nach einer geraden Linie gesucht wird, die zu der ersten Markiereinheitenart gehört. Wird eine solche Markiereinheit gefunden, kann davon ausgegangen werden, dass die Markieranordnung sicher identifiziert ist. Es werden nun die in dem erkannten Bild Leuchtmittel den verbleibenden Markierungen der Markiereinheit, soweit möglich, zugewiesen, indem den in dem Bild erkannten Leuchtmitteln die Funktion "Markierung" zugeordnet wird.

Mit diesen Markierungen wird dann die Lage und der Position der Markieranordnung anhand der Markierungen in Kenntnis der Anordnung der Markierungen auf der Markieranordnung, bspw. mittels der beschriebenen Algorithmen, bestimmt.

Weitere Vorteile, Merkmale und Anwendungsmöglichkeiten der Erfindung ergeben sich aus der nachfolgenden Beschreibung bevorzugter Ausführungsbeispiele und der Zeichnung. Dabei gehören alle beschriebenen und/oder bildlich dargestellten Merkmale zusammen oder in beliebiger fachmännisch sinnvoller Kombination zum Gegenstand der Erfindung, auch unabhängig von ihrer Zusammenfassung in beschriebenen bzw. dargestellten Ausführungsbeispielen. Die Erfindung wird durch die Ansprüche definiert.

Es zeigen:
- Figur 1: schematisch eine bevorzugte Ausführungsform der erfindungsgemäßen Vorrichtung;
- Figur 2: die Seitenansicht der in Figur 1 dargestellten Markieranordnung;
- Figur 3: die Seitenansicht einer alternativen Ausführungsform einer Markieranordnung gemäß der Erfindung;
- Figur 4: schematisch ein bei der Durchführung einer bevorzugten Ausführungsform des Verfahrens gemäß der Erfindung aufgenommenes Bild mit zwei in dem Bild erkennbaren Markieranordnungen;
- Figur 5: schematisch bei der Durchführung einer bevorzugten Ausführungsform des Verfahrens für Bild gemäß Figur 4 ermittelte gerade Linien mit drei Leuchtmitteln;
- Figur 6: eine Prinzipdarstellung der räumlichen Anordnung von Markierungen und Kommunikationselementen bei einer Markieranordnung aus Figur 1; und
- Figur 7: eine Prinzipdarstellung der räumlichen Anordnung von Markierungen und Kommunikationselementen bei einer Markieranordnung ähnlich der in Figur 3 gezeigten.

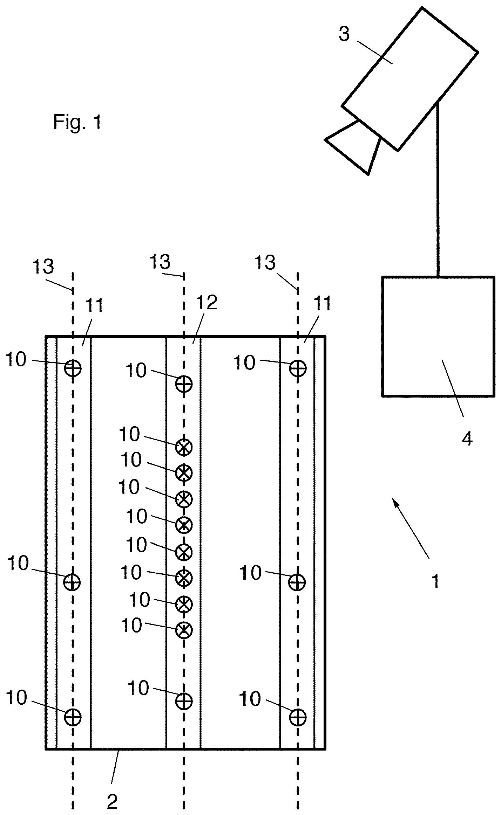

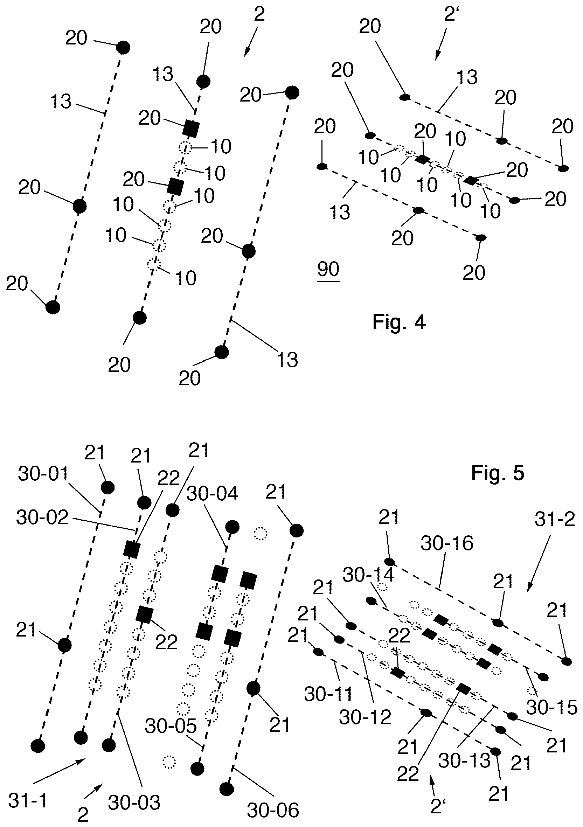

Figur 1 zeigt schematisch eine Vorrichtung 1 zur Lage- und Positionserkennung von Markierungen im dreidimensionalen Raum mit einer Markieranordnung 2 dar. Die Markieranordnung 2 umfasst in dem dargestellten Beispiel insgesamt drei Markiereinheiten 11, 12 mit entlang einer Linie 13 angeordneten Leuchtmitteleinrichtungen 10. Die Leuchtmitteleinrichtungen 10 sind im angeschalteten Zustand optisch aktiv und senden Licht oder besonders bevorzugt Infrarotlicht aus. Die Leuchtmitteleinrichtungen 10 können insbesondere als an- und ausschaltbare LEDs konfiguriert sein, die beispielsweise auf einer Platine angeordnet sein können. Im optisch aktiven Zustand werden die Leuchtmitteleinrichtungen 10 auch aus Leuchtmittel 20 bezeichnet, die in den Figuren 4 bis 7 dunkel dargestellt sind. In Figur 1 sind alle Leuchtmitteleinrichtungen 10 in einem ausgeschalteten Zustand dargestellt. Im Betrieb der Vorrichtung 1 weist jede der Markiereinheiten 11, 12 mindestens drei Leuchtmittel 20, d.h. angeschaltete Leuchtmitteleinrichtungen 10, auf, wobei die Leuchtmittel 20 als Markierungen 21 und/oder Kommunikationselemente 22 ausgebildet sind.

Die Vorrichtung 1 umfasst eine insbesondere als Kamera (Digitalkamera) ausgebildete optische Bilderfassungseinheit 3, die im Raum kalibriert ist. Die Bilderfassungseinheit / Kamera 3 ist zur Aufnahme von Bildern 90 der Markieranordnung 2 eingerichtet. Die Kamera 3 ist an eine Auswerteeinheit 4 angeschlossen, die in der bereits beschriebenen Weise zur eindeutigen Bestimmung der Lage und der Position der Markieranordnung 2 aus genau einem Bild 90 der einen optischen Bilderfassungseinheiten3 eingerichtet ist.

Die Markieranordnung 2 hat zwei Markiereinheiten 11 einer ersten Markiereinheitenart mit im Betrieb drei Leuchtmitteln 20. In dem hier darstellten Beispiel sind also alle drei Leuchtmitteleinrichtungen 10 der beiden Markiereinheiten 11 angeschaltet und übernehmen die Funktion einer Markierung 21. Diese Funktion ist in Figur 1 durch ein in der Leuchtmitteleinrichtung 10 dargestelltes Kreuz angedeutet. Entsprechend sind alle Markiereinheiten 11 im Betrieb gleich mit drei Leuchtmitteln 20 an genau derselben Position ausgebildet. Dies können meist schon durch den relativen Abstand der Leuchtmittel 20 in dem aufgenommenen Bild identifiziert werden.

Zwischen den zwei Markiereinheiten 11 der ersten Markiereinheitenart ist in der Markieranordnung 2 eine Markiereinheit 12 einer zweiten Markiereinheitenart angeordnet mit im Betrieb genau zwei Markierungen 21 (Kreuz in der Leuchtmitteleinrichtung 10) und mindestens einem Kommunikationselement 22. Diese Funktion "Kommunikationselement" ist in Figur 1 durch ein in der Leuchtmitteleinrichtung 10 dargestelltes X angedeutet. Hardwareseitig können die Leuchtmitteleinrichtungen 10, unabhängig von Ihrer Funktion "Markierung" oder "Kommunikationselement" bevorzugt jedoch gleich ausgebildet sein.

In der Markiereinheit 12 der zweiten Markiereinheitenart sind die beiden als Markierungen 21 dienenden Lichtmittel 20 an den beiden Enden der Markiereinheit angeordnet und werden auch als Endmarkierungen bezeichnet. Diese Definition gilt allgemein in diesem Text. Zwischen diesen (genau zwei) Markierungen 20 sind die mindestens zwei bis fünf Leuchtmittel 20 der Markiereinheit 12 angeordnet, die die Funktion von Kommunikationselementen 22 übernehmen.

Gemäß einer bevorzugten Ausführung der erfindungsgemäßen Vorrichtung 1 dienen die Kommunikationselemente 22 der mindestens einen Markiereinheit 12 zweiter Art der Markieranordnung 2 der eindeutigen Identifikation der Markieranordnung 2. Dies wird dadurch erreicht, dass in einer Vorrichtung 1 alle verwendeten Markiereinheiten 2 dazu eingerichtet sind, jeweils eine einzigartige Kombination von Kommunikationselementen 20 zu zeigen.

Alle Leuchtmitteleinrichtungen 10, und entsprechend alle Markierungen 21 und ggf. Kommunikationselemente 22 der Markiereinheiten 11, 12 liegen auf einer Linie 13, wobei die (alle) Kommunikationselemente 22 zwischen den beiden Markierungen 21 der Markiereinheit 12 angeordnet sind. Dies erleichtert die Auswertung. Darüber hinaus ist der Abstand der Endmarkierungen (in dem zuvor definierten Sinne) bei den Markiereinheiten 11 der ersten Markiereinheitenart und den Markiereinheiten 12 der zweiten Markiereinheitenart verschieden, vorzugsweise ist der Abstand der Endmarkierungen bei Markiereinheiten 12 der zweiten Art kleiner als bei Markiereinheiten 11 der ersten Art. Ferner sind alle Markiereinheiten 11, 12 der Markieranordnung 2 parallel angeordnet, d.h. die Linien 13 ihrer Leuchtmitteleinrichtungen 10 verlaufen parallel. Besonders bevorzugt ist die darstellte Variante, in der die Markiereinheiten 11 der ersten Markiereinheitenart ein Rechteck aufspannen und die Markiereinheit 12 der zweiten Markiereinheitenart symmetrisch entlang der Mittelachse dieses Rechtecks in dem Rechteck angeordnet ist. Die sich daraus ergebende Anordnung von Markierungen 21 lässt sich durch geeignete Selektionskriterien in den aufgenommenen Bild 90 leicht erkennen und für die Auswertung selektieren.

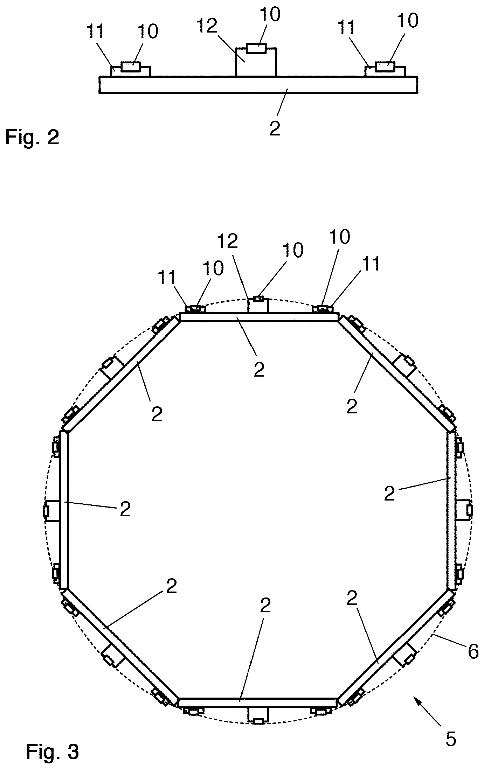

Wie in der Seitenansicht der Markiereinheit 2 gemäß Figur 2 zu entnehmen, ist die Markiereinheit 12 der zweiten Art zwischen den Markiereinheiten 11 der ersten Art erhöht angeordnet. Hierdurch wird erreicht, dass die Markiereinheit 12 nicht koplanar zu den beiden Markiereinheiten 11 angeordnet sind, die eine Ebene aufspannen.

Die Auswerteeinheit 4 ist in Kenntnis der Anordnung der Markiereinheiten 11, 12 in der Markieranordnung 2 zur Erkennung der Markiereinheiten 11 der ersten Markiereinheitenart und Markiereinheiten 12 der zweiten Markiereinheitenart bzw. damit gleichbedeutend deren Markierungen 21 und zur eindeutigen Bestimmung der Lage und der Position der Markieranordnung 2 unter Verwendung (vorzugsweise ausschließlich) der Markierungen 21 von erkannten Markiereinheiten 11, 12 der ersten Markiereinheitenart und der zweiten Markiereinheitenart eingerichtet.

Figur 3 zeigt eine Multi-Markieranordnung 5, in der mehrere Markieranordnungen 2 hohlzylinderförmig angeordnet sind in der Weise, dass die Leuchtmitteleinrichtungen 10 zumindest annähernd auf eine gedachten Zylinderoberfläche 6 liegen.

Damit stellt die Multi-Markieranordnung 5 ein Ausführungsbeispiel für einen konvexen Körper dar, dessen Position und Lage auch mit nur einer Kamera 3 im Raum bei fast jeder Lage der Multi-Markieranordnung 5 zuverlässig erkannt werden kann. Eine bevorzugte Verwendung einer solchen Multi-Markieranordnung 5 stellt daher eine Anwendung dar, in der die Multi-Markieranordnung 5 um ein Werkzeug herum festgelegt ist.

Anhand der Figuren 4 und 5 wird nachfolgend der grundsätzliche Ablauf zur Bildauswertung im Rahmen der Anwendung des vorgeschlagenen Verfahrens zur Bestimmung der Lage und Position beschrieben.

Figur 4 zeigt ein Bild 90 einer Kamera respektive optischen Bilderfassungseinheit 3, das der Auswerteeinheit 4 zur Auswertung und Durchführung des erfindungsgemäßen Verfahren zugeführt wird.

Das Bild 90 zeigt zwei Markieranordnungen 2, 2', die sich in unterschiedlicher Entfernung und Ausrichtung im Raum befinden. Insbesondere können die Markieranordnungen 2, 2' an nicht dargestellten Objekten im Raum, wie Werkzeugen oder Körperteilen, festlegt sein, um einen Bewegungsablauf nachverfolgen (tracken) zu können.

In dem Bild sind nur die Leuchtmittel 20 als Lichtpunkte zu erkennen. Weder die Linien 13, auf denen die Leuchtmittel 20 angeordnet sind, noch die (nicht angeschalteten und damit optisch nicht aktiven) Leuchtmitteleinrichtungen 10, die in Figur 4 als gestrichelte Kreise an den Positionen eingeblendet sind, an denen diese auf den Markiereinheiten 11, 12 angeordnet sind. Auch sehen die Leuchtmittel in dem Bild 90 alle gleich aus. Die unterschiedlichen Formen (Kreis für Markierung 21 und Quadrat für Kommunikationselement 22) lassen sich dem Bild an sich nicht entnehmen. Diese Informationen werden im Rahmen der nachfolgend erläuterten Bildauswertung erst ermittelt.

In einem Verfahrensschritt werden alle Leuchtmittel 20 in dem Bild 90 erfasst und diesen zweidimensionale Bildkoordinaten (x_{B}, y_{B}) zuordnet. Damit ist jedes Leuchtmittel 20 im aufgenommenen Bild 90 identifiziert.

Anschließend werden in Bild 90 alle gerade Linien 30-01, 30-02, 30-03, 30-04, 30-05, 30-06 und 30-11, 30-12, 30-13, 30-14, 30-15, 30-16 mit insgesamt drei Leuchtmitteln 20 ermittelt, wie in Figur 5 schematisch gezeigt. Alle parallelen geraden Linien 30 werden zu Paketen 31-1 und 31-2 zusammengestellt, die potentiell zu einer Markieranordnung 2, 2' gehören können. Außerdem werden aus den Paketen 31-1 und 31-2 diejenigen Linien 30-01, 30-02, 30-03, 30-06 und 30-11, 30-12, 30-13, 30-16 ausgewählt, die näherungsweise gleich lang sind, d.h. einen vergleichbaren Abstand zwischen den Endpunkten (Endmarkierrungen) aufweisen. In dem dargestellten Beispiel sind die Linien 30-04 und 30-05 sowie 30-14 und 30-15 deutlich kürzer. Diese können damit keinen der Markieranordnungen 2, 2' zugeordnet werden und werden aus den Paketen 31-1 respektive 21-2 gestrichen.

In den verbleiben Linien 30 der Pakte 31-1 und 31-2 werden diejenigen Linien 30-02, 30-03 sowie 30-12, 30-13 ausgewählt, die dieselben Endpunkte (respektive Endmarkierungen in Sinne von am Ende der Linien angeordneten Leuchtmitteln 20) mit verschiedenen positionierten Leuchtmitteln 20 zwischen den Endpunkten aufweisen. Es wird darauf hingewiesen, dass diese Linie 30-02, 30-03 sowie 30-12, 30-13 in dem Bild 90 (entsprechend Figur 4) übereinanderliegen und deren Endpunkte jeweils dieselben Bildkoordinaten aufweisen (respektive für jedes Paket 31-1 und 31-2). Diese Linien sind in Figur 5 zur Verdeutlichung dieses Auswertungsschritts nebeneinander dargestellt.

Die Linien 30-02 und 30-03 können somit einer Markiereinheit 12 der zweiten Art einer Markieranordnung 2 und die Linien 30-12 und 30-13 können somit einer Markiereinheit 12 der zweiten Art einer anderen Markieranordnung 2' zugewiesen werden. Damit ist dann eine Zuordnung von Markierungen 21 und Kommunikationselementen 22 möglich. Aus dem Muster der Kommunikationselemente 22 ist zudem die Markiereinheit 2 respektive 2' eindeutig identifizierbar.

Die Leuchtmittel 20 der verbliebenden Linien 30-01, 30-06 sowie 30-11, 30-16 werden entsprechend Markiereinheiten 11 der ersten Art zugewiesen. Die Leuchtmittel 20 sind dann entsprechend Markierungen 21.

Aus den nun zugeordneten Markierungen 21 jeder der erkannten Markieranordnungen 2, 2' rechnet die Auswerteeinheit 4 die Lage und Position der Markieranordnungen 2. 2' in der schon erläuterten und dem Fachmann grundsätzlich bekannten Art und Weise aus.

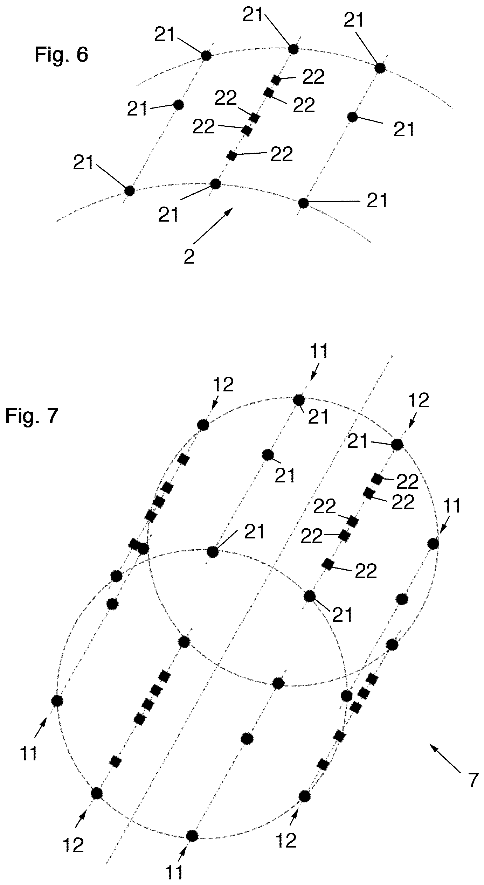

Figur 6 zeigt eine dreidimensionale Anordnung von Markierungen 21 und Kommunikationselementen 22 für eine Markieranordnung 2, bei der fünf Kommunikationselemente 22 vorgesehen sind.

Figur 7 zeigt dreidimensionale Anordnung von Markierungen 21 und Kommunikationselementen 22 für eine als konvexen Körper ausgebildete Markieranordnung 7, die grundsätzlich der in Figur 3 dargestellten Multi-Markieranordnung 5 ähnlich ist.

Die Markierungen 21 und Kommunikationselementen 22 sind auf einer Zylinderoberfläche 6 positioniert, auf der immer abwechselnd eine Markiereinheit 11 erster Art und eine Markiereinheit 12 zweiter Art nebeneinander anordnet sind. Jede Markiereinheit 12 weist neben den Markierungen 21 an ihren entgegengesetzten Enden fünf Kommunikationselementen 22 in jeweils unterschiedlicher Kodierung auf, was eine Lageerkennung eines mit dem Markieranordnung 7 verbundenen Objekts erlaubt, auch wenn von einer Bildaufnahmeeinrichtung 3 nur eine Markiereinheit 12 zweiter Art aufgenommen wird.

### Bezugszeichenliste:

- 1: Vorrichtung
- 2, 2': Markieranordnung
- 3: als Digitalkamera ausgebildete Bilderfassungseinheit
- 4: Auswerteeinheit
- 5: Multi-Markieranordnung
- 6: gedachte Zylinderoberfläche
- 7: als konvexer Körper ausgebildete Markieranordnung
- 10: Leuchtmitteleinrichtungen
- 11: Markiereinheit der ersten Markiereinheitenart
- 12: Markiereinheit der zweiten Markiereinheitenart
- 13: Linie
- 20: Leuchtmittel
- 21: Markierung
- 22: Kommunikationselement
- 30: gerade Linien aus der Bildauswertung
- 31: Pakete aus geraden Linien zusammengestellt
- 90: aufgenommenes Bild

## Patentansprüche

1. Vorrichtung zur Lage- und Positionserkennung von Markierungen (21) im dreidimensionalen Raum mit
- mindestens einer Markieranordnung (2, 7), wobei die Markieranordnung (2, 7) mindestens drei Markiereinheiten (11, 12) mit jeweils entlang einer geraden Linie (13) angeordneten Leuchtmitteln (20) umfasst, wobei jede der Markiereinheiten (11, 12) mindestens drei Leuchtmittel (20) aufweist und die Leuchtmittel (20) als Markierungen (21) und/oder Kommunikationselemente (22) ausgebildet sind und wobei die geraden Linien (13) der Leuchtmittel (20) der Markiereinheiten (11, 12) der Markieranordnung (2, 7) parallel zueinander angeordnet sind,
- mindestens einer optischen Bilderfassungseinheit (3), die zur Aufnahme von Bildern (90) der Markieranordnung (2, 7) eingerichtet ist, und
- einer Auswerteeinheit (4), die zur eindeutigen Bestimmung der Lage und der Position der Markieranordnung (2, 7) aus genau einem Bild (90) einer der optischen Bilderfassungseinheiten (3) eingerichtet ist,
- wobei die Markieranordnung (2, 7) mindestens zwei Markiereinheiten (11) einer ersten Markiereinheitenart und mindestens eine Markiereinheit (12) einer zweiten Markiereinheitenart aufweist, die in einer der Auswerteeinheit bekannten, festen Anordnung relativ zueinander festgelegt sind, wobei die Markiereinheiten (11) der ersten Markiereinheitenart genau drei Markierungen (21) aufweisen,
- wobei die Markiereinheiten (12) der zweiten Markiereinheitenart genau zwei Markierungen (21) und mindestens zwei Kommunikationselemente (22) aufweisen, wobei alle Kommunikationselemente (22) zwischen den beiden Markierungen (21) angeordnet sind,
- wobei die Markiereinheit (12) der zweiten Markiereinheitenart außerhalb einer Ebene angeordnet ist, die durch zwei Markiereinheiten (11) der ersten Markiereinheitenart aufgespannt wird, und wobei
- die Auswerteeinheit (4) zur Erkennung der Markiereinheiten (11, 12) der ersten Markiereinheitenart und der zweiten Markiereinheitenart und zur eindeutigen Bestimmung der Lage und der Position der Markieranordnung (2, 7) unter Verwendung der Markierungen (21) von erkannten Markiereinheiten (11, 12) der ersten Markiereinheitenart und der zweiten Markiereinheitenart eingerichtet ist.

2. Vorrichtung nach Anspruch 1, **dadurch gekennzeichnet, dass** die Länge der Markiereinheiten (11, 12) der ersten und der zweiten Markiereinheitenart näherungsweise gleich ist, d.h. sich nicht um mehr als 10% unterscheidet.

3. Vorrichtung nach einem der vorhergehenden Ansprüche, **dadurch gekennzeichnet, dass** in der Markieranordnung (2, 7) benachbart zu einer Markiereinheit (12) der zweiten Markiereinheitenart immer eine Markiereinheit (12) der ersten Markiereinheitenart angeordnet ist.

4. Vorrichtung nach einem der vorhergehenden Ansprüche, **dadurch gekennzeichnet, dass** mehrere Markieranordnungen (2) zu einer gemeinsamen Struktur zusammengefasst werden, in der die einzelnen Markieranordnungen (2) definiert zueinander angeordnet sind und eine Multi-Markieranordnung (5) bilden, wobei die Außenkontur der gemeinsamen Struktur einen konvexen Körper bildet.

5. Vorrichtung nach einem der vorhergehenden Ansprüche, **dadurch gekennzeichnet, dass** die Auswerteeinheit (4) zur Durchführung des Verfahrens nach einem der Ansprüche 6 bis 9 eingerichtet ist.

6. Verfahren zur Lage- und Positionserkennung von Markierungen (21) im dreidimensionalen Raum unter Verwendung einer Vorrichtung (1) mit
- mindestens einer Markieranordnung (2, 7) wobei die Markieranordnung (2, 7) mindestens drei Markiereinheiten (11, 12) mit jeweils entlang einer geraden Linie (13) angeordneten Leuchtmitteln (20) umfasst, wobei jede der Markiereinheiten (11, 12) mindestens drei Leuchtmittel (20) aufweist und die Leuchtmittel (20) als Markierungen (21) und/oder Kommunikationselemente (22) ausgebildet sind und wobei die geraden Linien (13) der Leuchtmittel (20) der Markiereinheiten (11, 12) der Markieranordnung (2, 7) parallel zueinander angeordnet sind,
- mindestens einer optischen Bilderfassungseinheit (3), und
- einer Auswerteeinheit (4),
- wobei die Markieranordnung (2, 7) mindestens zwei Markiereinheiten (11) einer ersten Markiereinheitenart und mindestens eine Markiereinheit (12) einer zweiten Markiereinheitenart aufweist, die in einer der Auswerteeinheit bekannten, festen Anordnung relativ zueinander festgelegt sind, wobei die Markiereinheiten (11) der ersten Markiereinheitenart genau drei Markierungen (21) aufweisen,
- wobei die Markiereinheiten (12) der zweiten Markiereinheitenart genau zwei Markierungen (21) und mindestens zwei Kommunikationselemente (22) aufweisen, wobei alle Kommunikationselemente (22) zwischen den beiden Markierungen (21) angeordnet sind,
- wobei die Markiereinheit (12) der zweiten Markiereinheitenart außerhalb einer Ebene angeordnet ist, die durch zwei Markiereinheiten (11) der ersten Markiereinheitenart aufgespannt wird,
wobei das Verfahren die folgenden Schritte umfasst:
- mittels der Bilderfassungseinheit (3), Aufnehmen eines Bildes (90) der Markieranordnung (2, 7);
- Erkennen der Leuchtmittel (20) in dem aufgenommenen Bild (90);
- Zuordnen von erkannten Leuchtmitteln (20) zu den mindestens zwei Markiereinheiten (11) der ersten Markiereinheitenart mit ausschließlich als Markierungen (21) ausgebildeten Leuchtmitteln (20);
- Zuordnen von erkannten Leuchtmitteln (20) zu der mindestens einen Markiereinheit (12) der zweiten Markiereinheitenart mit als Markierungen (21) und Kommunikationselementen (22) ausgebildeten Leuchtmitteln (20);
- wobei das Zuordnen von erkannten Leuchtmitteln (20) zu Markiereinheiten (11, 12) der ersten oder der zweiten Markiereinheitenart den Schritt beinhaltet, in dem aufgenommenen Bild (90) alle geraden Linien (30) mit insgesamt genau drei Leuchtmitteln (20) zu ermitteln und aus der Gesamtheit der ermittelten geraden Linien (30) diejenigen Linien ermittelt werden, die parallel liegen,
- Zuweisen der Funktion Markierung oder der Funktion Kommunikationselement zu den in dem Bild (90) erkannten Leuchtmitteln (20);
- mittels der Auswerteeinheit (4), Bestimmung der Lage und der Position der Markieranordnung (2, 7) anhand der Markierungen (21) in Kenntnis der Anordnung der Markierungen (21) auf der Markieranordnung (2, 7).

7. Verfahren nach Anspruch 6, **dadurch gekennzeichnet, dass** bei einer Vorrichtung (1), bei der die Länge der Markiereinheiten (11, 12) der ersten und der zweiten Markiereinheitenart näherungsweise gleich ist, d.h. sich nicht um mehr als 10% unterscheidet, aus der Gesamtheit der ermittelten geraden Linien (30) diejenigen Linien ermittelt, bei denen der Abstand zwischen den Endpunkten der geraden Linien (30) vergleichbar ist.

8. Verfahren nach einem der Ansprüche 6 oder 7, **dadurch gekennzeichnet, dass** aus den ermittelten geraden Linien (30) diejenigen Linien ausgewählt werden, die zu einer Markiereinheit (12) der zweiten Markiereinheitenart gehören, und aus den Kommunikationselementen (22) der Markiereinheit (12) der zweiten Markiereinheitenart eine Identifikation der Markieranordnung (2, 7) abgeleitet wird.

9. Verfahren nach Anspruch 8, **dadurch gekennzeichnet, dass** um die geraden Linien (30), die zu der zweiten Markiereinheitenart gehören, ein Suchbereich definiert wird, in dem nach einer geraden Linie (30) gesucht wird, die zu der ersten Markiereinheitenart gehört.

## Claims

1. Device for the orientation and position detection of markings (21) in three-dimensional space with
- at least one marking arrangement (2, 7), wherein the marking arrangement (2, 7) comprises at least three marking units (11, 12) each having light sources (20) arranged along a straight line (13), wherein each of the marking units (11, 12) has at least three light sources (20), and the light sources (20) are configured as markings (21) and/or communication elements (22), and wherein the straight lines (13) of the light sources (20) of the marking units (11, 12) of the marking arrangement (2, 7) are arranged parallel to one another,
- at least one optical image acquisition unit (3) configured to capture images (90) of the marking arrangement (2, 7), and
- an evaluation unit (4) configured to uniquely determine the orientation and position of the marking arrangement (2, 7) from exactly one image (90) of one of the optical image acquisition units (3),
- wherein the marking arrangement (2, 7) has at least two marking units (11) of a first marking unit type and at least one marking unit (12) of a second marking unit type, which are fixed in a defined arrangement relative to one another known to the evaluation unit, wherein the marking units (11) of the first marking unit type have exactly three markings (21),
- wherein the marking units (12) of the second marking unit type have exactly two markings (21) and at least two communication elements (22), wherein all communication elements (22) are arranged between the two markings (21),
- wherein the marking unit (12) of the second marking unit type is arranged outside a plane defined by two marking units (11) of the first marking unit type, and wherein
- the evaluation unit (4) is configured to recognize the marking units (11, 12) of the first marking unit type and the second marking unit type and to uniquely determine the orientation and position of the marking arrangement (2, 7) using the markings (21) of detected marking units (11, 12) of the first marking unit type and the second marking unit type.

2. Device according to claim 1, **characterized in that** the length of the marking units (11, 12) of the first and the second marking unit type is approximately equal, i.e., does not differ by more than 10%.

3. Device according to any one of the preceding claims, **characterized in that** in the marking arrangement (2, 7) a marking unit (12) of the first marking unit type is always arranged adjacent to a marking unit (12) of the second marking unit type.

4. Device according to any one of the preceding claims, **characterized in that** several marking arrangements (2) are combined into a common structure in which the individual marking arrangements (2) are arranged in a defined manner relative to one another and form a multi-marking arrangement (5), wherein the outer contour of the common structure forms a convex body.

5. Device according to any one of the preceding claims, **characterized in that** the evaluation unit (4) is configured to carry out the method according to any one of claims 6 to 9.

6. Method for the orientation and position detection of markings (21) in three-dimensional space using a device (1) with
- at least one marking arrangement (2, 7), wherein the marking arrangement (2, 7) comprises at least three marking units (11, 12) each having light sources (20) arranged along a straight line (13), wherein each of the marking units (11, 12) has at least three light sources (20), and the light sources (20) are configured as markings (21) and/or communication elements (22), and wherein the straight lines (13) of the light sources (20) of the marking units (11, 12) of the marking arrangement (2, 7) are arranged parallel to one another,
- at least one optical image acquisition unit (3), and
- an evaluation unit (4),
- wherein the marking arrangement (2, 7) has at least two marking units (11) of a first marking unit type and at least one marking unit (12) of a second marking unit type, which are fixed in a defined arrangement relative to one another known to the evaluation unit, wherein the marking units (11) of the first marking unit type have exactly three markings (21),
- wherein the marking units (12) of the second marking unit type have exactly two markings (21) and at least two communication elements (22), wherein all communication elements (22) are arranged between the two markings (21),
- wherein the marking unit (12) of the second marking unit type is arranged outside a plane defined by two marking units (11) of the first marking unit type,
wherein the method comprises the following steps:
- using the image acquisition unit (3), capturing an image (90) of the marking arrangement (2, 7);
- detecting the light sources (20) in the captured image (90);
- assigning detected light sources (20) to the at least two marking units (11) of the first marking unit type having light sources (20) configured exclusively as markings (21);
- assigning detected light sources (20) to the at least one marking unit (12) of the second marking unit type having light sources (20) configured as markings (21) and communication elements (22);
- wherein the assigning of detected light sources (20) to marking units (11, 12) of the first or the second marking unit type includes the step of determining, in the captured image (90), all straight lines (30) with a total of exactly three light sources (20) and, from the entirety of the determined straight lines (30), those lines that are parallel,
- assigning the function of marking or the function of communication element to the light sources (20) detected in the image (90);
- using the evaluation unit (4), determining the orientation and position of the marking arrangement (2, 7) based on the markings (21) with knowledge of the arrangement of the markings (21) on the marking arrangement (2, 7).

7. Method according to claim 6, **characterized in that**, for a device (1) in which the length of the marking units (11, 12) of the first and the second marking unit type is approximately equal, i.e., does not differ by more than 10%, from the entirety of the determined straight lines (30) those lines are determined for which the distance between the endpoints of the straight lines (30) is comparable.

8. Method according to any one of claims 6 or 7, **characterized in that** from the determined straight lines (30) those lines are selected that belong to a marking unit (12) of the second marking unit type, and an identification of the marking arrangement (2, 7) is derived from the communication elements (22) of the marking unit (12) of the second marking unit type.

9. Method according to claim 8, **characterized in that** around the straight lines (30) that belong to the second marking unit type, a search area is defined in which a straight line (30) belonging to the first marking unit type is searched for.

## Revendications

1. Dispositif pour la détection de l'orientation et de la position de marquages (21) dans l'espace tridimensionnel avec
- au moins un dispositif de marquage (2, 7), lequel dispositif de marquage (2, 7) comprend au moins trois unités de marquage (11, 12) avec des sources lumineuses (20) disposées le long d'une ligne droite (13), chacune des unités de marquage (11, 12) comportant au moins trois sources lumineuses (20) et les sources lumineuses (20) étant conçues comme des marquages (21) et/ou des éléments de communication (22), et les lignes droites (13) des sources lumineuses (20) des unités de marquage (11, 12) du dispositif de marquage (2, 7) étant disposées parallèlement les unes aux autres,
- au moins une unité d'acquisition d'images optiques (3) conçue pour capturer des images (90) du dispositif de marquage (2, 7), et
- une unité d'évaluation (4) équipée pour déterminer de manière unique l'orientation et la position du dispositif de marquage (2, 7) à partir d'une seule image (90) de l'une des unités d'acquisition d'images optiques (3),
- le dispositif de marquage (2, 7) comportant au moins deux unités de marquage (11) d'un premier type d'unité de marquage et au moins une unité de marquage (12) d'un deuxième type d'unité de marquage, qui sont fixées dans une disposition relative fixe connue de l'unité d'évaluation, les unités de marquage (11) du premier type d'unité de marquage comportant exactement trois marquages (21),
- les unités de marquage (12) du deuxième type d'unité de marquage comportant exactement deux marquages (21) et au moins deux éléments de communication (22), tous les éléments de communication (22) étant disposés entre les deux marquages (21),
- l'unité de marquage (12) du deuxième type d'unité de marquage étant disposée en dehors d'un plan défini par deux unités de marquage (11) du premier type d'unité de marquage, et l'unité d'évaluation (4) étant configurée pour reconnaître les unités de marquage (11, 12) du premier type d'unité de marquage et du deuxième type d'unité de marquage et pour déterminer de manière unique l'orientation et la position du dispositif de marquage (2, 7) en utilisant les marquages (21) des unités de marquage détectées (11, 12) du premier type d'unité de marquage et du deuxième type d'unité de marquage.

2. Dispositif selon la revendication 1, **caractérisé en ce que** la longueur des unités de marquage (11, 12) du premier et du deuxième type d'unité de marquage est approximativement égale, c'est-à-dire ne diffère pas de plus de 10 %.

3. Dispositif selon l'une des revendications précédentes, **caractérisé en ce que**, dans le dispositif de marquage (2, 7), une unité de marquage (12) du premier type d'unité de marquage est toujours disposée adjacent à une unité de marquage (12) du deuxième type d'unité de marquage,.

4. Dispositif selon l'une des revendications précédentes, **caractérisé en ce que** plusieurs dispositifs de marquage (2) sont combinés en une structure commune dans laquelle les dispositifs de marquage individuels (2) sont disposés de manière définie les uns par rapport aux autres et forment un multi-dispositif de marquage (5), le contour extérieur de la structure commune formant un corps convexe.

5. Dispositif selon l'une des revendications précédentes, **caractérisé en ce que** l'unité d'évaluation (4) est configurée pour mettre en œuvre le procédé selon l'une des revendications 6 à 9.

6. Procédé pour la détection de l'orientation et de la position de marquages (21) dans l'espace tridimensionnel, en particulier à l'aide d'un dispositif (1) avec
- au moins un dispositif de marquage (2, 7), lequel dispositif de marquage (2, 7) comprend au moins trois unités de marquage (11, 12) avec des sources lumineuses (20) disposées le long d'une ligne droite (13), chacune des unités de marquage (11, 12) comportant au moins trois sources lumineuses (20) et les sources lumineuses (20) étant conçues comme des marquages (21) et/ou des éléments de communication (22), et les lignes droites (13) des sources lumineuses (20) des unités de marquage (11, 12) du dispositif de marquage (2, 7) étant disposées parallèlement les unes aux autres,
- au moins une unité d'acquisition d'images optiques (3), et
- une unité d'évaluation (4),
- le dispositif de marquage (2, 7) comportant au moins deux unités de marquage (11) d'un premier type d'unité de marquage et au moins une unité de marquage (12) d'un deuxième type d'unité de marquage, qui sont fixées dans une disposition relative fixe connue de l'unité d'évaluation, les unités de marquage (11) du premier type d'unité de marquage comportant exactement trois marquages (21),
- les unités de marquage (12) du deuxième type d'unité de marquage comportant exactement deux marquages (21) et au moins deux éléments de communication (22), tous les éléments de communication (22) étant disposés entre les deux marquages (21),
- l'unité de marquage (12) du deuxième type d'unité de marquage étant disposée en dehors d'un plan défini par deux unités de marquage (11) du premier type d'unité de marquage,
le procédé comprenant les étapes suivantes :
- à l'aide de l'unité d'acquisition d'images (3), prise d'une photo (90) du dispositif de marquage (2, 7) ;
- détection des sources lumineuses (20) dans l'image enregistrée (90) ;
- attribution des sources lumineuses détectées (20) aux au moins deux unités de marquage (11) du premier type d'unité de marquage avec des sources lumineuses (20) conçues exclusivement comme marquages (21) ;
- attribution des sources lumineuses détectées (20) à l'au moins une unité de marquage (12) du deuxième type d'unité de marquage avec des sources lumineuses (20) conçues comme marquages (21) et éléments de communication (22) ;
- dans laquelle l'attribution des sources lumineuses détectées (20) aux unités de marquage (11, 12) du premier ou du deuxième type d'unité de marquage comprenant l'étape consistant à déterminer, dans l'image enregistrée (90), toutes les lignes droites (30) avec au total exactement trois sources lumineuses (20) et, parmi l'ensemble des lignes droites déterminées (30), les lignes qui sont parallèles,
- attribution de la fonction marquage ou de la fonction élément de communication aux sources lumineuses (20) détectées dans l'image (90) ;
- au moyen de l'unité d'évaluation (4), détermination de l'orientation et de la position du dispositif de marquage (2, 7) sur la base des marquages (21) en connaissant la disposition des marquages (21) sur le dispositif de marquage (2, 7).

7. Procédé selon la revendication 6, **caractérisé en ce que,** pour un dispositif (1) dans lequel la longueur des unités de marquage (11, 12) du premier et du deuxième type d'unité de marquage est approximativement égale, c'est-à-dire ne diffère pas de plus de 10 %, parmi l'ensemble des lignes droites déterminées (30), sont déterminées les lignes pour lesquelles la distance entre les extrémités des lignes droites (30) est comparable.

8. Procédé selon l'une des revendications 6 ou 7, **caractérisé en ce que,** parmi les lignes droites déterminées (30), sont sélectionnées les lignes qui appartiennent à une unité de marquage (12) du deuxième type d'unité de marquage, et une identification du dispositif de marquage (2, 7) est dérivée des éléments de communication (22) de l'unité de marquage (12) du deuxième type d'unité de marquage.

9. Procédé selon la revendication 8, **caractérisé en ce qu'**autour des lignes droites (30) qui appartiennent au deuxième type d'unité de marquage, une zone de recherche est définie, dans laquelle est recherchée une ligne droite (30) qui appartient au premier type d'unité de marquage.
